# EUROPEAN PATENT SPECIFICATION

(11) **EP 2 978 274 B1**
(45) Date of publication and mention of the grant of the patent: **25.04.2018**
(21) Application number: 14768427.8
(22) Date of filing: 20.03.2014
(51) Int. Cl.: H04L 12/751

(54) **COMMUNICATION SYSTEM, MOBILE NODE, MOBILE COMMUNICATION METHOD AND PROGRAM**
KOMMUNIKATIONSSYSTEM, MOBILER KNOTEN, MOBILKOMMUNIKATIONSVERFAHREN UND PROGRAMM
SYSTÈME DE COMMUNICATION, NOEUD MOBILE, PROCÉDÉ DE COMMUNICATION MOBILE, ET PROGRAMME

(30) Priority: 22.03.2013 JP 2013060709
(43) Date of publication of application: 27.01.2016
(73) Proprietor: NEC Corporation, Tokyo 108-8001 (JP)
(72) Inventor: MORITA, Gen, Tokyo 108-8001 (JP); KARINO, Shuichi, Tokyo 108-8001 (JP); SAIDA, Yoshinori, Tokyo 108-8001 (JP); WATANABE, Yoshikazu, Tokyo 108-8001 (JP); IIHOSHI, Takahiro, Tokyo 108-8001 (JP)
(74) Representative: Betten & Resch
(86) International application number: PCT/JP2014/057829
(87) International publication number: WO 2014/148615

(56) References cited:
- EP-A1- 1 858 198
- WO-A1-2008/105158
- JP-A- 2009 213 070
- JP-A- 2011 504 699
- US-A1- 2008 310 349
- US-A1- 2009 103 490
- US-A1- 2010 238 887

## Description

### TECHNICAL FIELD

### (Reference to Related Application)

This application is based upon and claims the benefit of the priority of Japanese Patent Application No. 2013-060709 filed on March 22, 2013.

The present invention relates to a communication system, a mobile node, a mobile communication method, and a program. Particularly, the present invention relates to a communication system including a plurality of base nodes that relay communications between mobile nodes and correspondent nodes. Still particularly, the present invention relates to a mobile node, a mobile communication method, and a program used in the communication system.

### BACKGROUND

While a mobile node (a mobile communication apparatus) and a correspondent node (a correspondent communication apparatus) are communicating with each other, if the IP (Internet Protocol) address used by the mobile node changes with movement of the mobile node, the ongoing communication could be interrupted. This is counted as a problem. As a technique for solving this problem, namely, for enabling a continuous communication, Mobile IPv6 (MIPv6) is known (NPL 1).

In a communication system using MIPv6, an individual mobile node (MN) uses: a home address (HoA) in a home network to which the MN originally belongs; and a care-of address (CoA) in a visited network. The HoA is an address allocated to the MN and is used when the MN communicates with a correspondent node (CN). The CoA is an address allocated to the MN in a visited network and is used when the MN communicates with a HA. Since a CoA is allocated to a MN per visited network, when the MN moves, the CoA changes. In a home network of a MN, there is a home agent (HA) that relays a communication between the MN and a CN. The HA manages a correspondence relationship between a HoA and a CoA that are allocated to an individual MN. The HA performs a communication between a MN and a CN by performing packet forwarding through a tunnel between the HA and the MN. When the CoA of the MN changes, the MN updates information about the correspondence relationship between the HoA and CoA in the HA (binding update (BU). In this way, it is possible to continue the communication between the MN and the CN without requiring awareness of change of the address of the MN. This can be seen in the teaching of document US 2010/238887 A1.

In MIPv6, each time a MN moves and its CoA changes, the MN needs to transmit a BU to its HA or CN. Thus, the more frequently a MN moves, the more control messages including BUs are transmitted. If the BUs are transmitted less frequency, the HA or CN cannot keep track of movement of the MN. As a result, loss of a packet or disconnection of a session occurs.

As a technique for solving these problems with MIPv6, Hierarchical Mobile IPv6 (HMIPv6) is known (PTL 1 and NPL 2). In HMIPv6, an apparatus referred to as a mobility anchor point (MAP) is added, and an HA-MAP hierarchical configuration is adopted. While MIPv6 uses a tunnel for data forwarding between an HA and a MN, HMIPv6 uses a double tunnel configuration of a HA-MN tunnel and a MAP-MN tunnel. The MAP-MN tunnel forwards encapsulated data in a HA-MN tunnel. When a MN moves in a network under a MAP, the MN transmits a BU to the MAP. When a MN moves in a network between MAPs, the MN transmits a BU to a corresponding HA. In addition, to accommodate addition of a MAP, as CoAs, an individual MN holds an on-link care-of address (LCoA) that is used in a visited network and a regional care-of address (RCoA) that is used under a MAP. In addition, as its current location, a MN registers its RCoA in a corresponding HA and registers its LCoA in a corresponding MAP.

By adopting the above configuration, Hierarchical MIPv6 realizes distribution of the load caused by the control messages such as the BUs, which are transmitted intensively to a HA(s) in MIPv6.

PTL 1 also discloses a load distribution technique. According to PTL 1, a function of a MAP is given to a subordinate access router (AR). In this way, when the MAP reaches a high load status, processing of the MAP can be delegated to the AR.

PTL 1:
   Patent No. 3993874
PTL 2:
   Japanese Patent Kokai Publication No. JP2012-169733A

NPL 1:
   D. Johnson, and others, "Mobility Support in IPv6," IETF, RFC 3775, June 2004.
NPL 2:
   H. Soliman, and others, "Hierarchical Mobile IPv6 Mobility Management (HMIPv6)," IETF, RFC 4140, August 2005.
NPL 3:
   Shuichi KARINO, Takahiro IIHOSHI, Gen MORITA, Akira TSUJI, "Using OpenFlow to Control Mobile Terminals from Operators," Technical Report of The Institute of Electronics, Information and Communication Engineers, vol.111, no.468, NS2011-201, pp.123-128, March 2012.

### SUMMARY

The following analysis has been made by the present inventors.

According to the technique disclosed in PTL 1, all communications relating to a MN (mobile node) go through a corresponding HA (home agent) or a MAP (mobility anchor point). Thus, the availability is low, which is counted as a problem.

One reason for the low availability is that, according to the technique disclosed in PTL 1, a MN does not have a mechanism for holding a plurality of HoAs (home addresses) and does not have a function of using a plurality of HAs or a plurality of MAPs simultaneously. Hereinafter, a HA, a MAP, and the like will collectively be referred to "anchor points (APs) or "base nodes." Since a MN uses its HoA when communicating with a CN, the HoA needs to be unique within the global network when seen from the CN. In the current global network, the same HoA is not allowed to exist in plurality. Thus, if a communication malfunction occurs in an AP, all the communications relating to the MNs accommodated in the AP malfunction.

Another reason for the low availability is that, according to the technique disclosed in PTL 1, there is no function of identifying a communication and determining whether to use an AP. Namely, communications for which a seamless communication does not need to be supported are also accommodated in an individual AP. Normally, when a communication for accessing a website is performed, the communication duration time is short. Namely, each time a website is accessed, a short communication is performed. Thus, even if the IP address changes each time, the service can be provided continuously. Namely, a seamless communication via an AP does not need to be supported. In contrast, when a streaming service such as for video distribution is performed, the communication duration time is long. Namely, if the IP address changes, the communication is disconnected. Thus, a seamless communication needs to be supported. If unnecessary communications are accommodated in an AP, the load on the apparatus is increased, and a failure is more likely to occur.

According to the technique disclosed in PTL 2, tunnels can be set in a MN, each of the tunnels leading to a different endpoint. By allocating a tunnel per communication, APs can be distributed per communication.

However, according to the technique disclosed in PTL 2, since only packet address information is used for selection of a tunnel, a tunnel cannot be allocated in view of a communication content such as the service of corresponding communication or the application performing corresponding communication.

In addition, according to the technique disclosed in NPL 3, OpenFlow is applied. More specifically, an individual MN is provided with an OpenFlow switch (OFS) function, and an OpenFlow controller (OFC) that controls the OFS is arranged in a network. The OFC controls the OFSs in the MNs and an OFS in the network. In this way, it is possible to provide a seamless communication while switching paths per communication.

However, the technique disclosed in NPL 3 adopts a configuration in which a communication always goes through the OFS in the network serving as an AP, and whether to use the OFS in the network per communication is not discussed.

In addition, in NPL 3, a single OFS is used in the network, and a case in which a plurality of OFSs are used is not discussed. If a plurality of APs are used and if a MN is provided with a plurality of HoAs, a communication application of the MN needs to select and use a HoA from the plurality of HoAs. However, according to the technique disclosed in NPL 3, such case cannot be accommodated.

In addition, according to the technique disclosed in NPL 3, the OFC may not be able to control the OFSs in the MNs.

As disclosed in NPL 3, tens of millions of control target OFSs could be used. In addition, if the OFC receives a Packet-in message, which is a query about a control content, as to each of the communications that occur in the MNs, the OFC needs to process control signals at least several times more than the number of MNs. Consequently, the OFC may not be able to process such enormous number of control signals.

In addition, if the IP address allocated to a MN changes, the MN needs to detect the change and notify the OFC in the network of the change. In response, the OFC needs to set packet processing rules in the OFS in the MN and in the OFS in the network. However, if the IP address of the MN changes, the control secure channel established between the OFS in the MN and the OFC in the network is disconnected. In such case, the OFS in the MN needs to connect to the OFC by using a new IP address. Namely, the OFC cannot control the OFS in the MN until the secure channel is re-connected.

Thus, there is a demand for improvement of the communication availability in a communication system in which a communication between a mobile node (MN) and a correspondent node (CN) is performed via a base node (AP: Anchor Point). An object of the present invention is to provide a mobile node, a communication system, a mobile communication method, and a program that contribute to fulfilling the demand. Other problems, demands, and new features will be made apparent from the present description and drawings attached thereto.

According to a first aspect of the present invention, there is provided a mobile node, comprising: selection means that selects, from a base node(s), a base node that relays a packet(s) between the mobile node and a correspondent node; and rule change means that sets, in the mobile node and the selected base node, a control rule(s) for forwarding the packet(s) between the mobile node and the correspondent node via the selected base node.

According to a second aspect of the present invention, there is provided a communication system, comprising: a mobile node; and a base node(s). The mobile node comprises: selection means that selects, from the base node(s), a base node that relays a packet(s) between the mobile node and a correspondent node; and rule change means that sets, in the mobile node and the selected base node, a control rule(s) for forwarding the packet(s) between the mobile node and the correspondent node via the selected base node.

According to a third aspect of the present invention, there is provided a mobile communication method, comprising: by a mobile node, selecting, from a base node(s), a base node that relays a packet(s) between the mobile node and a correspondent node; and setting, in the mobile node and the selected base node, a control rule(s) for forwarding the packet(s) between the mobile node and the correspondent node via the selected base node.

According to a fourth aspect of the present invention, there is provided a program, causing a computer provided in the mobile node to execute: selecting, from a base node(s), a base node that relays a packet(s) between the mobile node and a correspondent node; and setting, in the mobile node and the selected base node, a control rule(s) for forwarding the packet(s) between the mobile node and the correspondent node via the selected base node. The program can be recorded in a non-transitory computer-readable storage medium and provided as a program product.

The mobile node, the communication system, the mobile communication method, and the program according to the present invention can improve the availability of a communication performed between a mobile node and a correspondent node via a base node.

### BRIEF DESCRIPTION OF THE DRAWINGS

Fig. 1 illustrates an exemplary configuration of a communication system according to an exemplary embodiment.
Fig. 2 is a block diagram illustrating an exemplary schematic configuration of a mobile node in the communication system according to the exemplary embodiment.
Fig. 3 is a block diagram illustrating an exemplary configuration of the mobile node according to the exemplary embodiment.
Fig. 4 is a block diagram illustrating an exemplary configuration of a path control means of the mobile node according to the exemplary embodiment.
Fig. 5 is a block diagram illustrating an exemplary configuration of a base node according to the exemplary embodiment.
Fig. 6 illustrates an exemplary configuration of a communication system according to a first exemplary embodiment.
Fig. 7 is a flowchart illustrating an exemplary operation of a mobile node according to the first exemplary embodiment.
Fig. 8 illustrates an exemplary session identifier table according to the first exemplary embodiment.
Fig. 9 illustrates an exemplary base node table according to the first exemplary embodiment.
Fig. 10 illustrates an exemplary communication identifier management table according to the first exemplary embodiment.
Fig. 11 illustrates exemplary path control rules in the mobile node according to the first exemplary embodiment.
Fig. 12 illustrates exemplary path control rules in a base node 12A according to the first exemplary embodiment.
Fig. 13 illustrates exemplary path control rules in a base node 12B according to the first exemplary embodiment.
Fig. 14 illustrates an exemplary configuration of a communication system according to a second exemplary embodiment.
Fig. 15 is a block diagram illustrating an exemplary configuration of a mobile node according to the second exemplary embodiment.
Fig. 16 is a block diagram illustrating an exemplary configuration of an OFS according to the second exemplary embodiment.
Fig. 17 is a block diagram illustrating an exemplary configuration of an anchor point according to the second exemplary embodiment.
Fig. 18 illustrates exemplary path control rules according to the second exemplary embodiment.
Fig. 19 is an exemplary session identifier table according to the second exemplary embodiment.
Fig. 20 is an exemplary base node table according to the second exemplary embodiment.
Fig. 21 is an exemplary communication identifier management table according to the second exemplary embodiment.
Fig. 22 illustrates exemplary path control rules in the mobile node according to the second exemplary embodiment.
Fig. 23 illustrates exemplary path control rules in an anchor point 22A according to the second exemplary embodiment.
Fig. 24 illustrates exemplary path control rules in an anchor point 22B according to the second exemplary embodiment.
Fig. 25 is a table illustrating communication identifiers according to the second exemplary embodiment.
Fig. 26 illustrates an exemplary configuration of a communication system according to a third exemplary embodiment.
Fig. 27 is a block diagram illustrating an exemplary configuration of a mobile node according to the third exemplary embodiment.
Fig. 28 is a block diagram illustrating an exemplary configuration of an anchor point according to the third exemplary embodiment.
Fig. 29 is an exemplary tunnel management table according to the third exemplary embodiment.
Fig. 30 is a table illustrating exemplary path control rules according to the third exemplary embodiment.

### PREFERRED MODES

First, an outline of an exemplary embodiment will be described. The reference characters in the following outline are used only as examples to facilitate understanding of the present invention, not to limit the present invention to the illustrated modes.

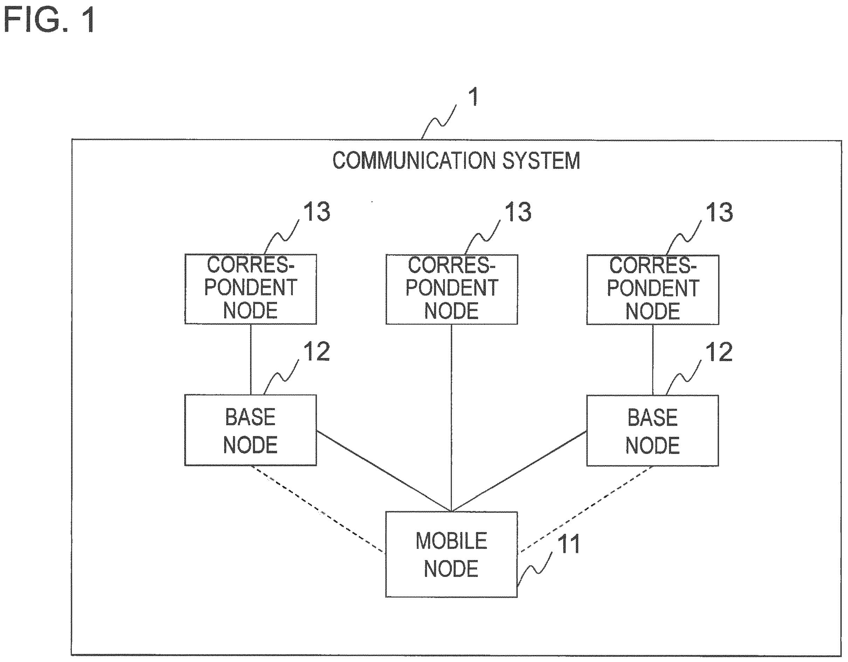

Fig. 1 illustrates an exemplary configuration of a communication system according to an exemplary embodiment. As illustrated in Fig. 1, a communication system 1 includes a mobile node 11, base nodes 12, and correspondent nodes 13.

The mobile node 11 can communicate with the plurality of base nodes 12, identifies communications with the respective correspondent nodes 13, and determines whether to use or selects a base node 12 per communication. In addition, the mobile node 11 controls the mobile node 11 and the base nodes 12 so that the mobile node 11 can communicate with any of the correspondent nodes 13 via a selected base node 12.

Regarding a communication performed between the mobile node 11 and a corresponding one of the correspondent nodes 13, an individual base node 12 forwards the communication between the mobile node 11 and the individual base node 12 in accordance with path control rules held in the base node 12.

An individual correspondent node 13 is a general-purpose communication apparatus having a protocol that enables the correspondent node 13 to communicate with the base nodes 12 and the mobile node 11.

In Fig. 1, each solid line indicates a logical path representing a communication between the mobile node 11 and a correspondent node 13. In contrast, each dashed line is a logical path representing a communication that uses control signals between the mobile node 11 and a base node 12. These logical paths do not need to match physical path configurations. For example, all the logical paths may exist in a single physical path or different physical paths.

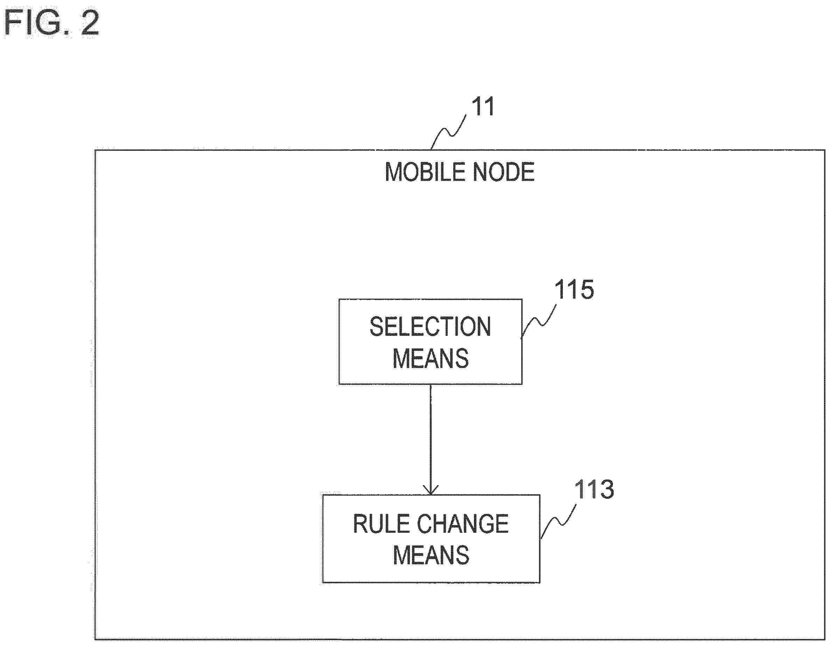

Fig. 2 is a block diagram illustrating an exemplary schematic configuration of the mobile node 11 in the communication system 1. As illustrated in Fig. 2, the mobile node 11 includes a selection means 115 and a rule change means 113. The selection means 115 selects a base node 12 for relaying packets between the mobile node 11 and a corresponding correspondent node 13 from at least one base node 12. The rule change means 113 sets control rules in the mobile node 11 and the selected base node 12 so that the packets between the mobile node 11 and the correspondent node 13 are forwarded via the selected base node 12.

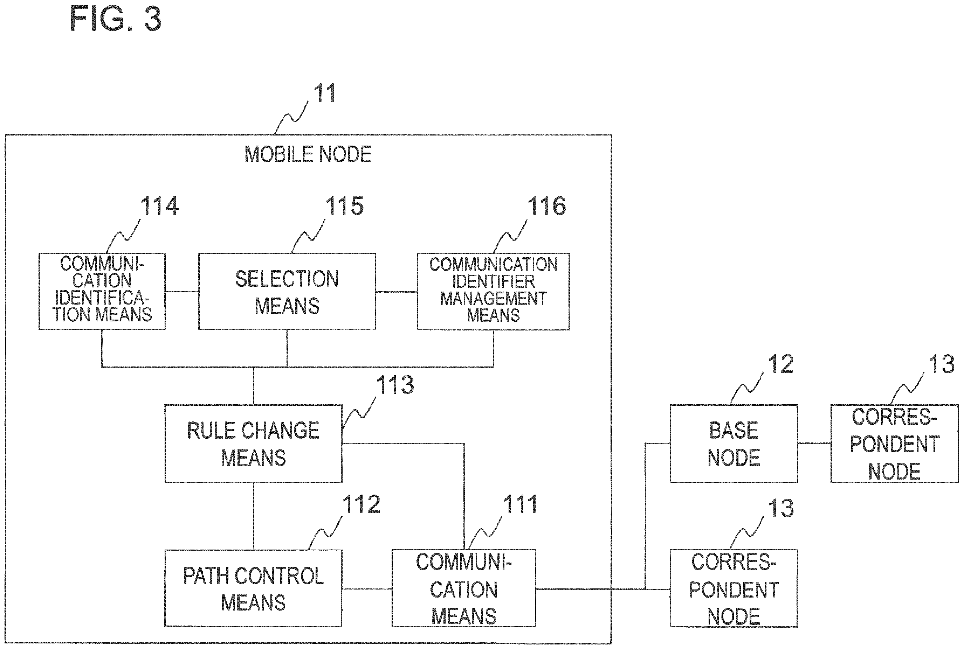

Fig. 3 is a block diagram illustrating an exemplary detailed configuration of the mobile node 11. As illustrated in Fig. 3, the mobile node 11 includes at least one communication means 111, a path control means 112 that controls communication paths, a rule change means 113 that changes path control rules to which the path control means 112 refers, a communication identification means 114 that refers to information about a communication and identifies the communication, a selection means 115 that determines whether to use or selects a base node 12 for an arbitrary communication, and a communication identifier management means 116 that manages association among communication identifiers used as communication sources and destinations, namely, communication identifiers of the correspondent nodes 13, communication identifiers of the base nodes 12, a communication identifier of each of the communication means 111, and communication identifiers that correspond to the mobile node 11 in the base nodes 12.

An individual communication means 111 performs a communication between the mobile node 11 and another apparatus. The communication means 111 is associated with at least one communication identifier. Hereinafter, such a communication identifier associated with the communication means 111 will be referred to as a "care-of communication identifier."

The path control means 112 controls paths of communications relating to the apparatus including this path control means 112 in accordance with path control rules held in the path control means 112. For example, in response to information from the communication means 111, the path control means 112 changes a communication identifier(s) used for a communication(s).

The rule change means 113 changes path control rules held in the path control means 112. In addition, the rule change means 113 controls path control means 112 outside the mobile node 11 via the communication means 111.

The communication identification means 114 refers to information about a communication and identifies the communication. For example, the communication identification means 114 may identify a communication service based on information about a corresponding source communication identifier or destination communication identifier. The communication identification means 114 may identify an application performing a communication based on a corresponding source communication identifier and context information about the mobile node. In the present exemplary embodiment, the communication identification means 114 determines an identifier that is obtained as a result of the identification to be a "session identifier." Such a session identifier may be configured by a single element or a plurality of elements. For example, the communication identification means 114 may use two elements of a source communication identifier and a destination communication identifier as a session identifier. The communication identification means 114 may use these elements and an application identifier as a session identifier.

The selection means 115 determines a base node 12 that corresponds to the session identifier obtained by the communication identification means 114 and a communication identifier used as a communication identifier of the mobile node 11 in the base node 12. Such communication identifier that is used as a communication identifier of the mobile node 11 in the base node 12 will hereinafter be referred to as a "base communication identifier." For example, the selection means 115 may select the base node 12 and the base communication identifier based on static information. The selection means 115 may select the base node 12 and the base communication identifier based on dynamic information such as the current load statuses of the base nodes 12.

For an individual session identifier, the communication identifier management means 116 manages a care-of communication identifier of the mobile node 11, a communication identifier of a base node 12, and a base communication identifier of the mobile node 11. Regarding the communication identifier of the base node 12, a communication identifier that identifies the apparatus of the base node 12 and a communication identifier used for forwarding a communication between the base node 12 and the mobile node 11 do not need to be the same. A communication identifier used for forwarding a communication with the mobile node 11 in a base node 12 will hereinafter be referred to as a "forwarding communication identifier." Namely, per session identifier, the communication identifier management means 116 manages a care-of communication identifier, a forwarding communication identifier, and a base communication identifier.

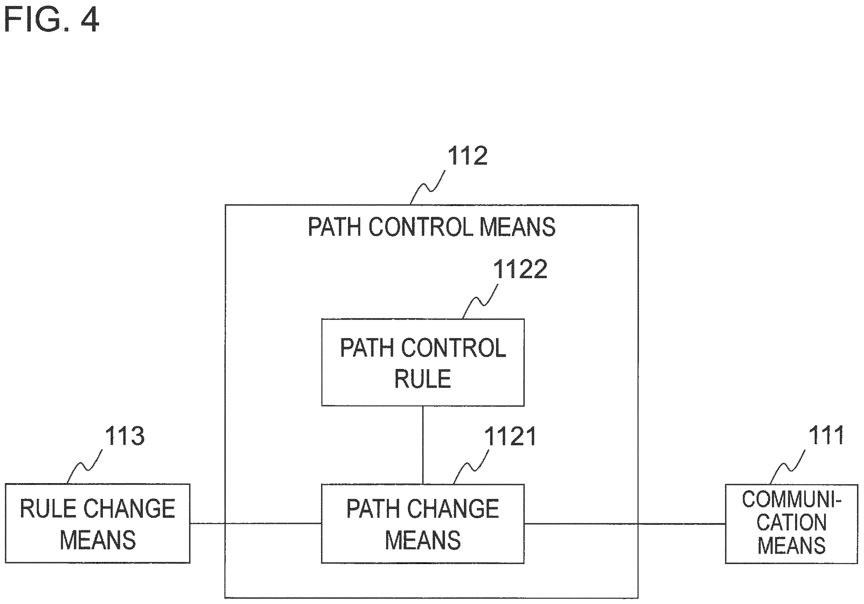

Fig. 4 is a block diagram illustrating an exemplary configuration of the path control means 112. As illustrated in Fig. 4, the path control means 112 includes a path change means 1121 and path control rules 1122.

As to a source communication identifier and/or a destination communication identifier of a communication relating to the path control means 112, the path change means 1121 searches the path control rules 1122 for a change rule relating to the communication. If a corresponding change rule exists, the path change means 1121 applies necessary change to the communication in accordance with the change rule and forwards the data to the corresponding communication means 111.

The path control rules 1122 holds the change rule that corresponds to the communication, the change rule including the source communication identifier and/or the destination communication identifier as a condition(s).

In the following description, the same elements as the above elements will be denoted by the same reference characters, and detailed description thereof will be omitted.

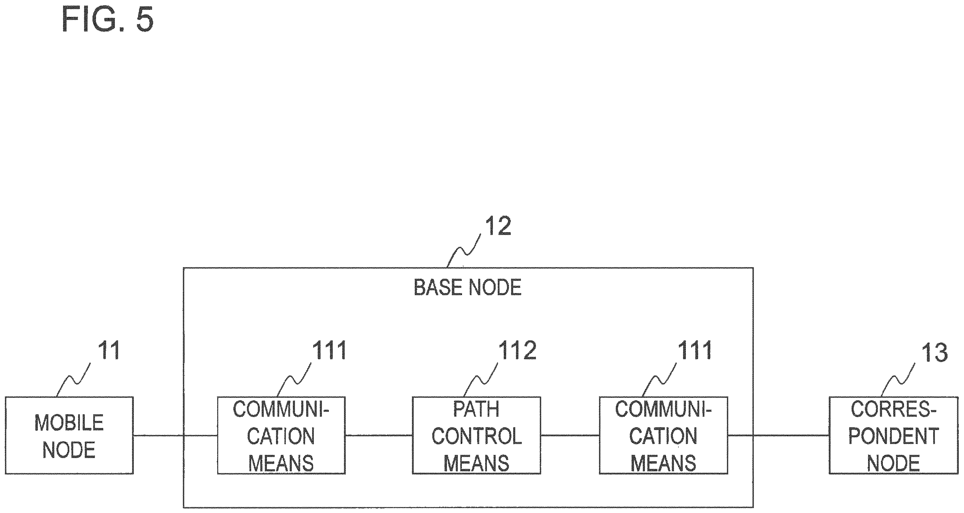

Fig. 5 is a block diagram illustrating an exemplary configuration of a base node 12. As illustrated in Fig. 5, the base node 12 includes at least one communication means 111 and a path control means 112.

The communication system according to the present exemplary embodiment includes a mobile node 11 that can use at least one communication means 111 and at least one base node 12. In addition, by arranging a base node 12 in a communication between the mobile node 11 and a correspondent node 13, even if a communication identifier of the mobile node 11 changes, the communication between the mobile node 11 and the correspondent node 13 is allowed to continue. In addition, the mobile node 11 includes: the communication identifier management means 116 that manages association among the communication identifiers of the mobile node 11 and the communication identifiers of the base nodes 12; a communication identification means 114 that identifies a communication based on communication identifiers, information in the mobile node, or a combination of such items of information; the selection means 115 that selects a base node per communication; a path control means 112 that changes communication paths in accordance with path control rules, and the rule change means 113 that changes path control rules in the mobile node 11 and path control rules in the base nodes 12.

With such configuration, the mobile node 11 can select whether to allow a base node 12 to mediate each communication between the mobile node 11 and a correspondent node 13. In addition, per communication, the mobile node 11 can select a mediating base node 12 from a plurality of base nodes 12. In this way, the continuity of the communications and the fault tolerance of the base nodes 12 can be improved, and the availability of the communication system can be improved.

In addition, by arranging the rule change means 113 in the mobile node 11, the control targets of the rule change means 113 can be limited to only the communications relating to the mobile node 11. In addition, the number of rule change means 113 is increased in proportion to the number of mobile nodes 11. If the number of mobile nodes 11 is increased, conventional techniques cause a problem that the rule change means 113 cannot control the path control means 112. However, the present invention can solve this problem, as described above.

Namely, for example, the communication system 1 having the above configuration provides the following first and second advantageous effects.

As the first advantageous effect, the availability of the communication system can be improved.

This is because, since the mobile node 11 can select base nodes 12 used for communications with a plurality of correspondent nodes 13, respectively, and can simultaneously use the plurality of base nodes 12, even if a communication failure occurs in a base node 12, the communications of the mobile node 11 are affected only partially.

In addition, the reason for the first advantageous effect is that, since the mobile node 11 determines whether to use a base node 12 for an arbitrary correspondent node 13, the load on an individual base node 12 can be reduced. As a result, the risk of occurrence of a failure can be reduced.

As the second advantageous effect, even if the number of mobile nodes 11 is increased significantly, the means (namely, the rule change means 113) for changing path control rules can effectively be secured.

This is because, since the mobile node 11 includes the rule change means 113 for changing path control rules, it is possible to update the path control rules 1122 included in the mobile node 11 without requiring a network. Namely, the communication required for the updating can be reduced.

In addition, the reason for the second advantageous effect is that, even when a communication identifier of the mobile node 11 changes, since the communication identifier of the corresponding base node 12 serving as the control destination does not change, the rule change means 113 included in the mobile node 11 can change the path control rules 1122 included in the base node 12.

In addition, the reason for the second advantageous effect is that the rule change means 113 included in the mobile node 11 can handles only its own communications as its control targets. In addition, the reason for the second advantageous effect is that the mobile node 11 can make changes independently of different mobile nodes. Namely, since the number of rule change means is increased as the number of mobile nodes is increased, the number of communications processed by an individual rule change means is not increased.

### <First Exemplary Embodiment>

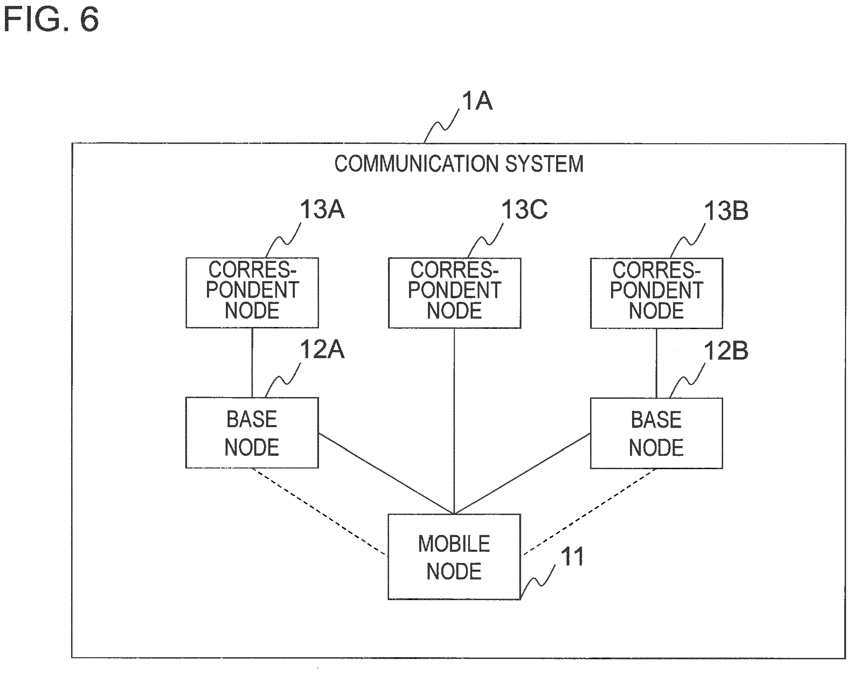

A communication system according to a first exemplary embodiment will be described with reference to the drawings. Fig. 6 illustrates an exemplary configuration of a communication system 1A according to the present exemplary embodiment. As illustrated in Fig. 6, the communication system 1A according to the present exemplary embodiment includes a mobile node 11, base nodes 12A and 12B, and correspondent nodes 13A to 13C.

Since the base nodes 12A and 12B have the same functions as those of the base nodes 12, description of the base nodes 12A and 12B will be omitted.

Since the correspondent nodes 13A to 13C have the same functions as those of the correspondent nodes 13, description of the correspondent nodes 13A to 13C will be omitted.

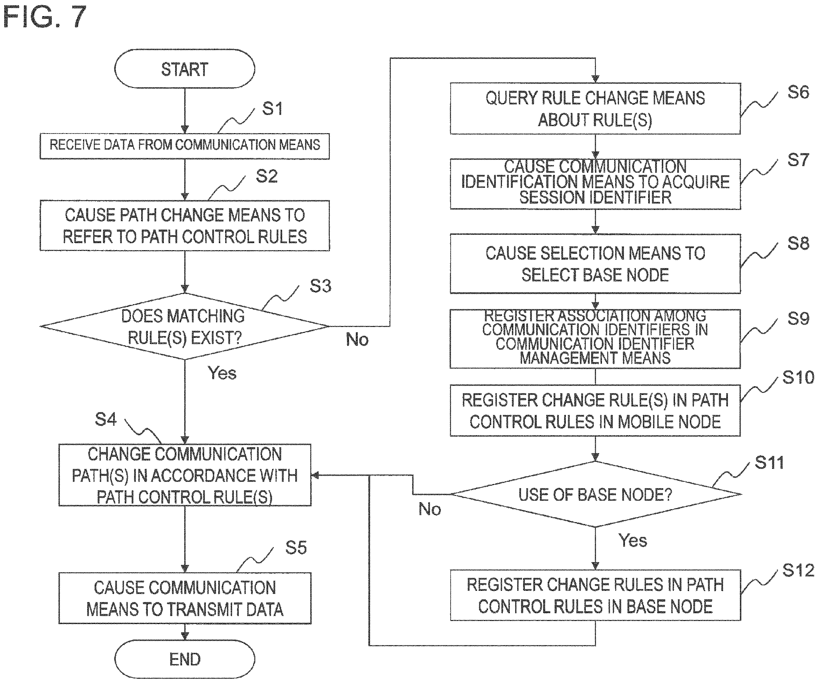

Next, an operation of the communication system 1A according to the present exemplary embodiment will be described in detail with reference to the drawings. Fig. 7 is a flowchart illustrating an exemplary operation of the communication system 1A according to the present exemplary embodiment.

First, an operation in which data is transmitted from the mobile node 11 to a correspondent node 13 will be described. The flowchart in Fig. 7 illustrates an exemplary procedure in which the mobile node 11 in Fig. 3 changes a communication identifier(s) given to data.

When a communication is started, the path change means 1121 receives data from a communication means 111 (step S1).

The path change means 1121 refers to the path control rules 1122 by using the communication identifiers given to the data (step S2) and determines whether a change rule(s) for a communication path that matches the communication exists (step S3).

If the path control rules 1122 do not include such change rule(s) (No in step S3), the path change means 1121 queries the rule change means 113 about a path control rule(s) for the communication identifiers given to the data (step S6).

The rule change means 113 queries the communication identification means 114 about the data communication identifiers included in the query from the path control means 112 and causes the communication identification means 114 to acquire a session identifier (step S7). The communication identification means 114 may use a session identifier table to determine a session identifier.

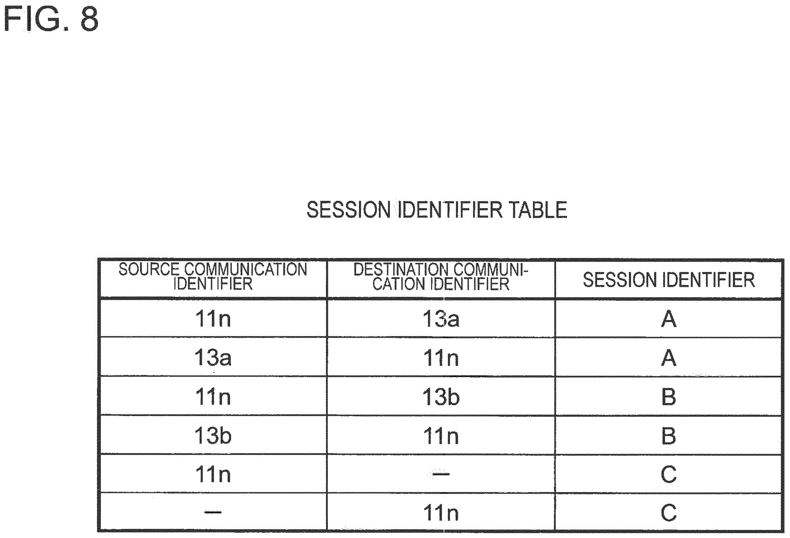

Fig. 8 is an exemplary session identifier table. The values in Fig. 8 are used as source communication identifiers or destination communication identifiers, and representation of communication identifiers are omitted. Unless otherwise specified, the values in the following tables represent communication identifiers, and representation of communication identifiers are omitted in the tables. A communication identifier 11n in Fig. 8 is a mobile node communication identifier provided to a communication application in the mobile node 11. In addition, communication identifiers 13a to 13c are communication identifiers of the correspondent nodes 13A to 13C, respectively. A session identifier can be uniquely determined based on information about source and destination communication identifiers. The session identifier determination method using the table is only an example. The session identifier may be determined in another way. In addition, the elements used for determining a session identifier are not limited to those illustrated in Fig. 8. Other elements may be used.

Based on the session identifier obtained by the communication identification means 114, the selection means 115 determines a destination base node 12 and acquires a forwarding communication identifier and a base communication identifier (step S8). The selection means 115 may use a base node table to select a base node 12.

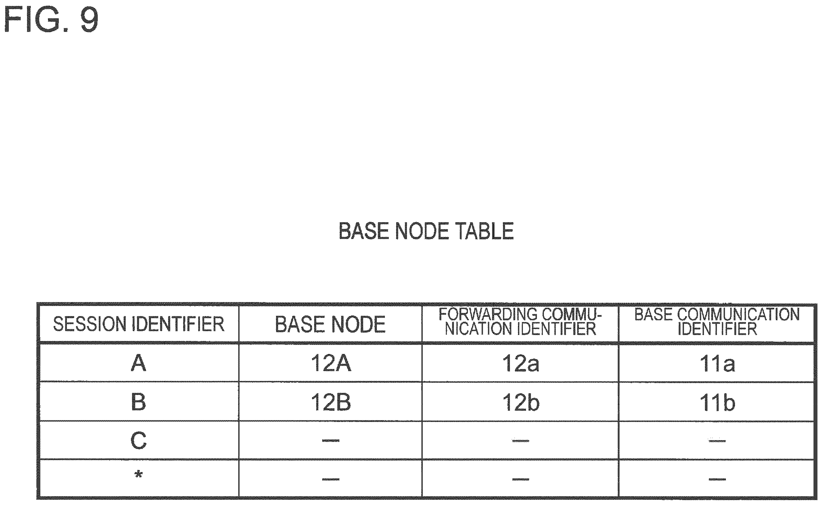

Fig. 9 is an exemplary base node table. In this table, a forwarding communication identifier and a base communication identifier relating to a base node that corresponds to the session identifier obtained by the communication identification means 114 are managed, and necessary communication identifiers can uniquely be determined. The base node determination method using the table is only an example. The base node 12 may be determined in another way. In addition, the elements in Fig. 9 used as the information relating to the session identifier are only examples. Other elements may be used.

Based on the communication identifier information obtained by the selection means 115, an entry for managing association between the session identifier and the communication identifiers is added to the communication identifier management means 116 (step S9). For example, a communication identifier management table may be used to manage such entries.

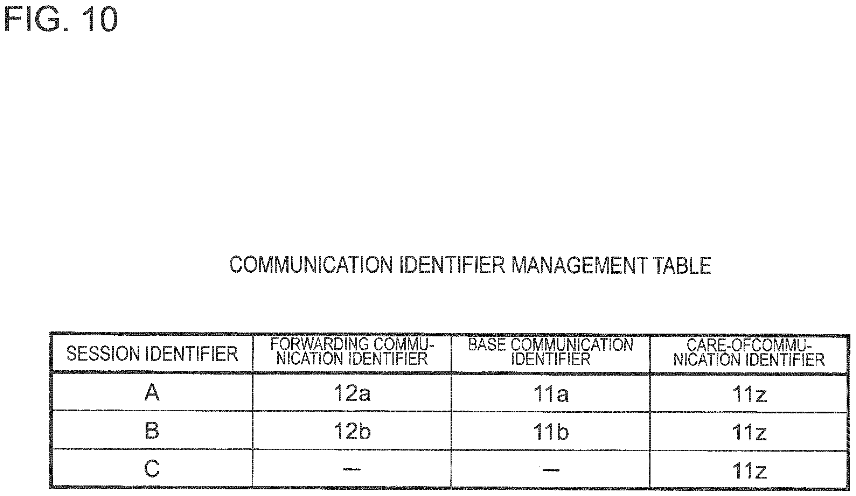

Fig. 10 is an exemplary communication identifier management table. An entry in the communication identifier management table includes a session identifier obtained by the communication identification means 114, a forwarding communication identifier and a base communication identifier obtained by the selection means 115, and a care-of communication identifier associated with a communication means 111. A care-of communication identifier that can reach the base node is selected from the care-of communication identifiers allocated to the communication means 111. By referring to this communication identifier management table, information necessary for path control of a communication having an arbitrary session identifier can be referred to. While a table has been used as a means for managing association among the session identifier and the communication identifiers, such management method using the table is only an example. Other means may be used. In addition, the managed elements illustrated in Fig. 10 are only examples. Other elements may be used.

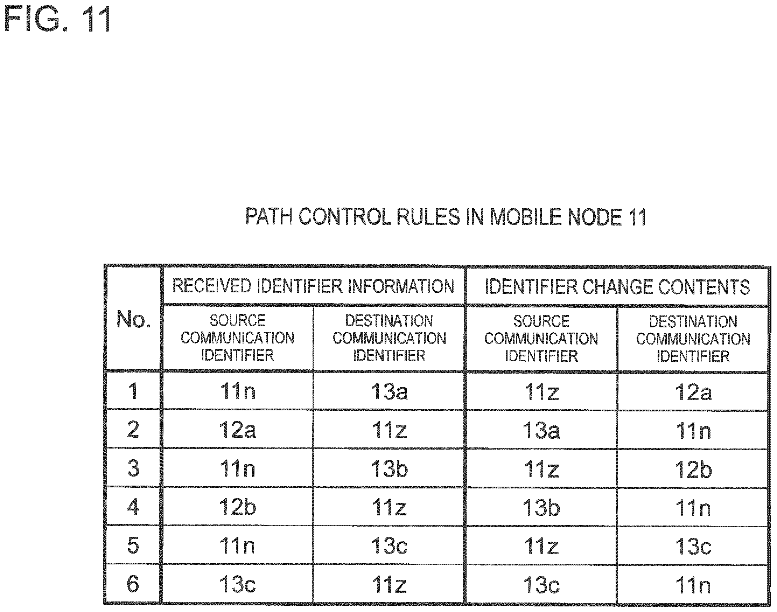

The rule change means 113 generates a path control rule(s) based on the association information among the session identifier and the communication identifiers obtained by the communication identifier management means 116 and registers a change rule(s) in the path control rules 1122 in the mobile node 11 (step S10). Fig. 11 is exemplary path control rules in the mobile node 11 generated by the rule change means 113.

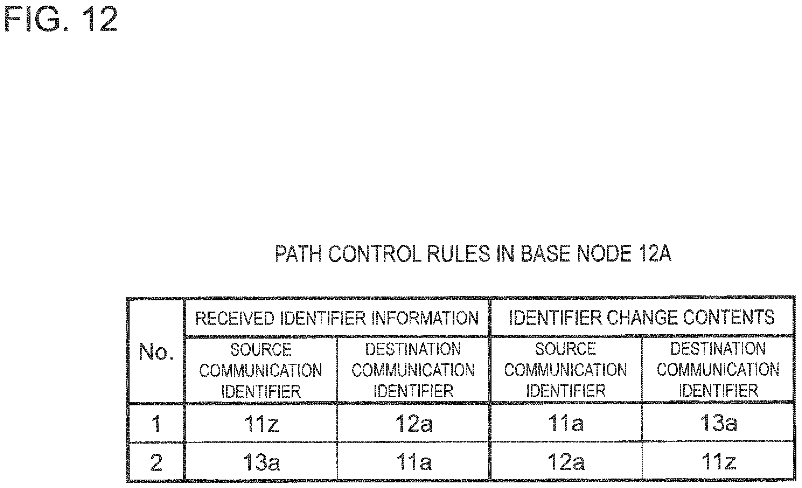

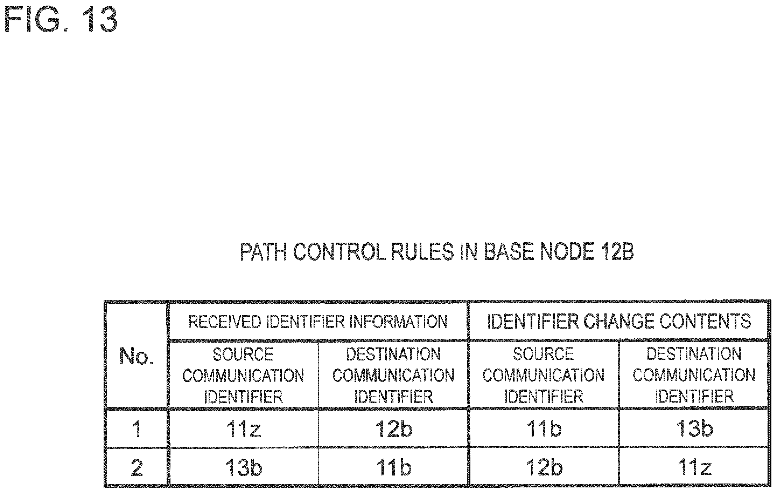

If the mobile node 11 uses the base node 12A or 12B (Yes in step S11), in addition to the above procedure, the mobile node 11 registers change rules in the path control rules 1122 in the base node 12A (or 12B) (step S12). Fig. 12 is a table illustrating exemplary path control rules in the base node 12A that are generated by the rule change means 113. Fig. 13 is a table illustrating exemplary path control rules in the base node 12B that are generated by the rule change means 113.

If the path control rules 1122 includes the above change rule(s) (Yes in step S3), the path control means 112 changes the corresponding communication path(s) in accordance with the change rule(s) (step S4). Otherwise (No in step S3), the path control means 112 changes the corresponding communication path(s) in accordance with the change rule(s) registered in step S10 (step S4).

Next, the communication means 111 transmits the data for which the communication path(s) has been changed (step S5).

A packet transmitted from the mobile node 11 to the correspondent node 13A is provided with the source identifier 11n and the destination identifier 13a. In accordance with a rule No.1 in Fig. 11, the mobile node 11 transmits the packet to the base node 12A by using a source identifier 11z and a destination identifier 12a. When receiving the packet, the base node 12A transmits the packet to the correspondent node 13A by using a source identifier 11a and the destination identifier 13a in accordance with a rule No.1 in Fig. 12.

However, a packet transmitted from the correspondent node 13A to the mobile node 11 is provided with the source identifier 13a and the destination identifier 11a. When receiving the packet from the correspondent node 13A, the base node 12A transmits the packet to the mobile node 11 by using the source identifier 12a and the destination identifier 11z in accordance with a rule No.2 in Fig. 12. When receiving the packet, the mobile node 11 performs communication reception processing by using the source identifier 13a and the destination identifier 11n in accordance with a rule No.2 in Fig. 11.

Since a communication between the mobile node 11 and the correspondent node 13B is performed in a similar way to the communication between the mobile node 11 and the correspondent node 13A, description of the communication will be omitted.

A packet transmitted from the mobile node 11 to the correspondent node 13C is provided with the source identifier 11n and the destination identifier 13c. In accordance with a rule No.5 in Fig. 11, the mobile node 11 transmits the packet to the correspondent node 13C by using the source identifier 11z and the destination identifier 13c.

A packet transmitted from the correspondent node 13C to the mobile node 11 is provided with the source identifier 13c and the destination identifier 11z. When receiving the packet from the correspondent node 13C, the mobile node 11 performs communication reception processing by using the source identifier 13c and the destination identifier 11n in accordance with a rule No.6 in Fig. 11.

Next, advantageous effects provided by the communication system 1A according to the present exemplary embodiment will be described.

In the present exemplary embodiment, with the above configuration, the mobile node 11 can determine whether to use a base node per communication and can select a plurality of base nodes. Thus, a communication failure of a base node affects the communications of the mobile node 11 to a limited extent. In addition, since the load of an individual base node can be reduced, the availability of the communication system can be improved.

In addition, in the present exemplary embodiment, since an individual mobile node includes a rule change means, even if the number of mobile nodes is increased, the path control means can be controlled. Namely, the above problem can be solved.

### <Second Exemplary Embodiment>

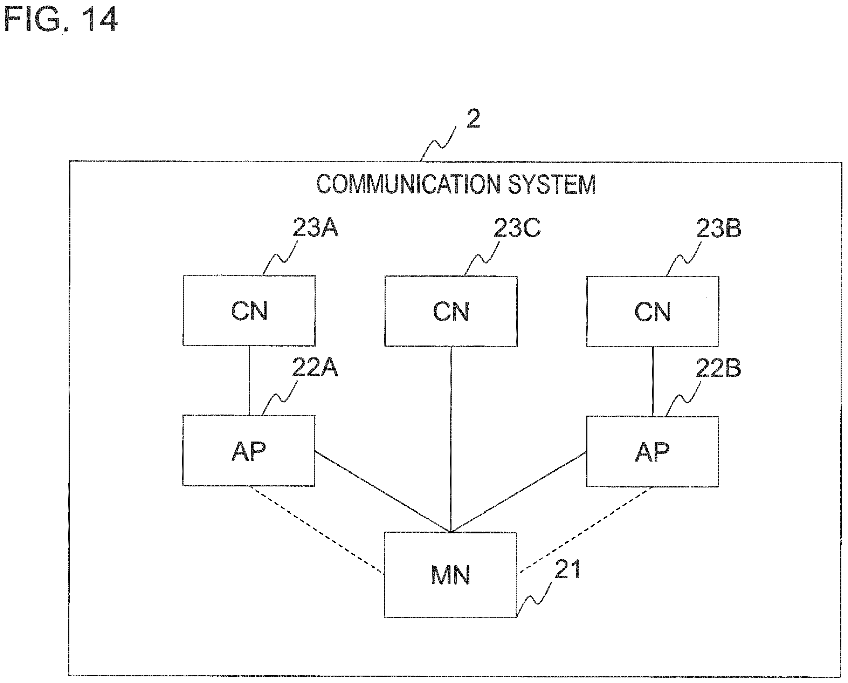

Next, a communication system according to a second exemplary embodiment will be described with reference to the drawings. The communication system according to the present exemplary embodiment is a system in which OpenFlow is applied to the communication system according to the first exemplary embodiment. Fig. 14 illustrates an exemplary configuration of a communication system 2 according to the present exemplary embodiment. As illustrated in Fig. 14, the communication system 2 includes a mobile node (MN) 21, anchor points (AP) 22A and 22B, and correspondent nodes (CN) 23A to 23C.

The MN 21 includes functions of an OpenFlow controller (OFC) and an OpenFlow switch (OFS) that are used in an OpenFlow technique and has a means for controlling packet processing rules in an OFS by using the OpenFlow protocol (OFP). The MN 21 corresponds to the mobile node 11 in the communication system according to the first exemplary embodiment.

The AP 22A includes functions of an OFS used in an OpenFlow technique, is controlled by an OFC, and can process packets based on packet processing rules. The AP 22A corresponds to a base node 12. Since the functions of the AP 22B are the same as those of the AP 22A, description of the AP 22B will be omitted.

The CN 23A is a general-purpose communication apparatus. For example, the CN 23A can communicate with other apparatuses by using the IP protocol. The CN 23A corresponds to a correspondent node 13 in the communication system according to the first exemplary embodiment. Since the functions of the CNs 23B and 23C are the same as those of the CN 23A, description of the CNs 23B and 23C will be omitted.

In the following description, the elements that are the same as those described in the first exemplary embodiment will be denoted by the same reference characters, and detailed description thereof will be omitted.

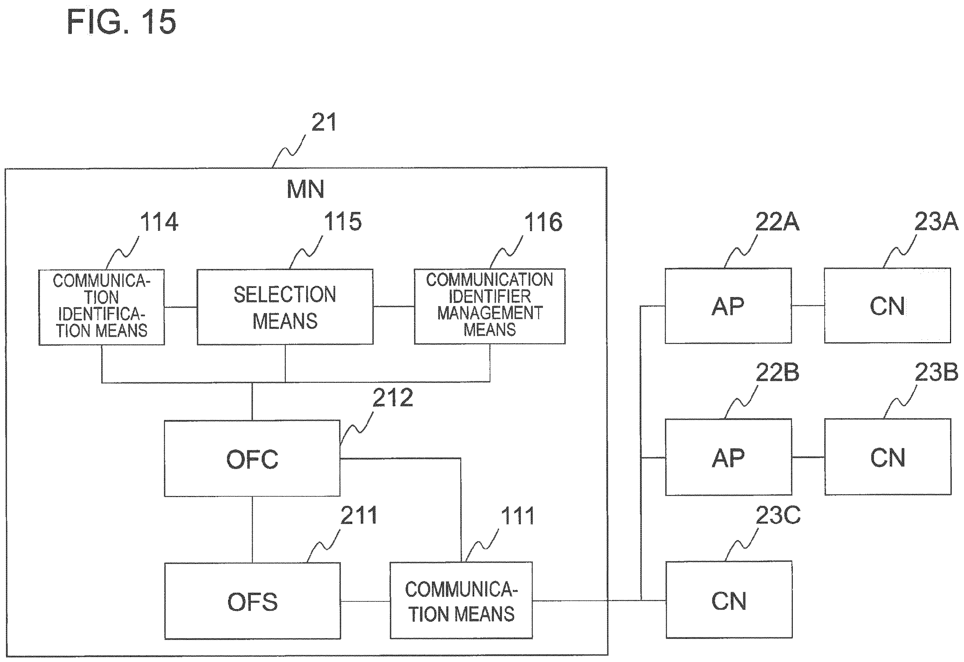

Fig. 15 is a block diagram illustrating an exemplary configuration of the MN 21. As illustrated in Fig. 15, the MN 21 includes at least one communication means 111, an OFS 211, OFC 212, a communication identification means 114, a selection means 115, and a communication identifier management means 116.

The OFS 211 includes functions of an OFS used in an OpenFlow technique and processes packets in accordance with packet processing rules held in the OFS 211. In addition, in accordance with an instruction for change of a packet processing rule from the OFC, the OFS 211 changes the corresponding packet processing rule held therein. The OFS 211 corresponds to the path control means 112 according to the first exemplary embodiment.

The OFC 212 includes functions of an OFC used in an OpenFlow technique and controls the OFS 211 by using the OFP. In addition, the OFC 212 can control an OFS(s) 211 that exists outside the MN 21 via the communication means 111. The OFC 212 corresponds to the rule change means 113 according to the first exemplary embodiment.

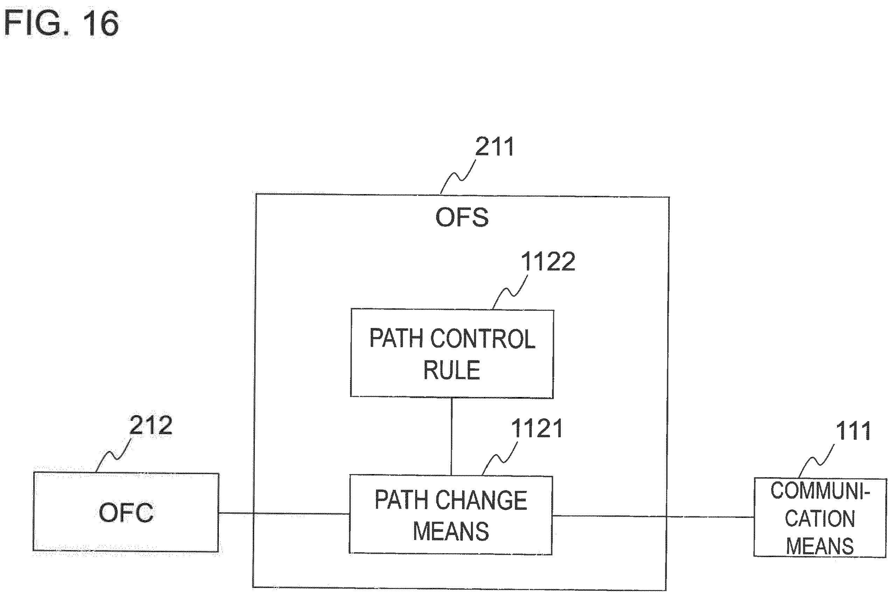

Fig. 16 is a block diagram illustrating an exemplary configuration of the OFS 211. As illustrated in Fig. 16, the OFS 211 includes a path change means 1121 and path control rules 1122. The path change means 1121 corresponds to a packet processing means in an OpenFlow technique. In addition, the path control rules 1122 correspond to packet processing rules in an OpenFlow technique.

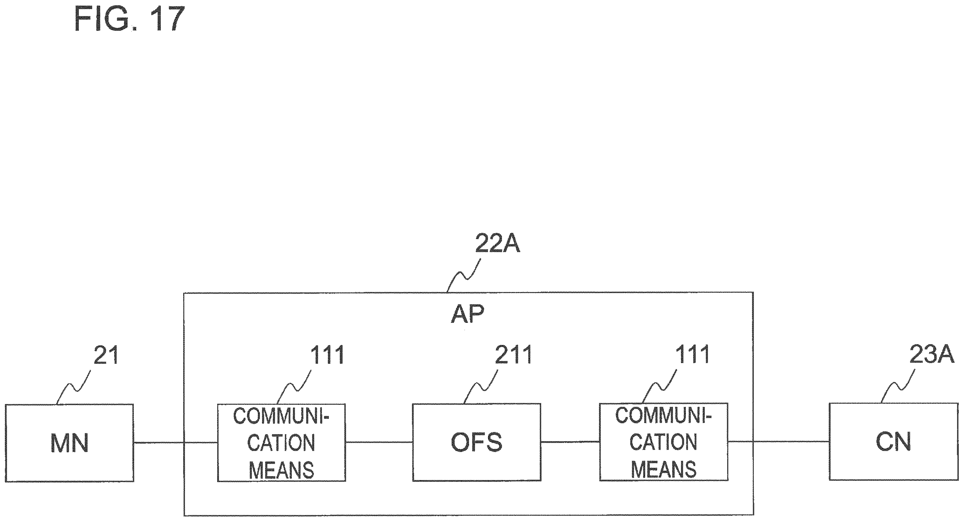

Fig. 17 is a block diagram illustrating an exemplary configuration of the AP 22A. As illustrated in Fig. 17, the AP 22A includes at least one communication means 111 and an OFS 211.

Next, an operation of the communication system 2 according to the present exemplary embodiment will be described.

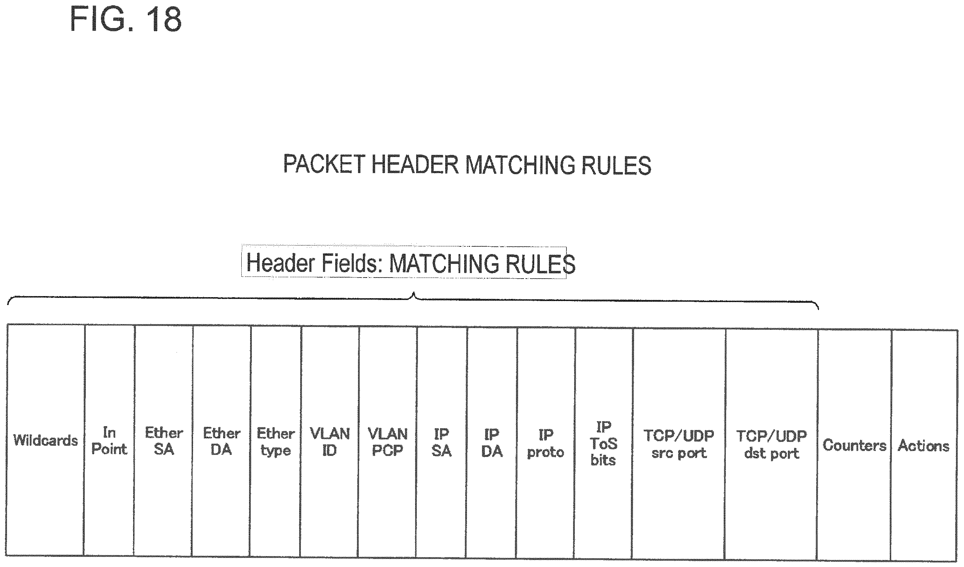

First, an operation in which a communication is transmitted after the source and destination thereof are changed will be described. When the OFS 211 receives a packet, the path change means 1121 refers to the path control rules 1122 based on information about the corresponding packet header. The path control rules 1122 are configured by the elements defined by the OFP. Fig. 18 is a table illustrating an exemplary path control rule configured by the elements defined by the OFP. As illustrated in Fig. 18, the path control rule includes a section for matching rules for identifying a communication, a section for communication statistical information (Counters), and a section for a packet processing rule(s) applied to the communication (Actions).

If the received packet corresponds to a communication that matches the path control rules 1122, the path change means 1121 processes the packet based on the corresponding packet processing rule(s) and transmits the packet. If not, the path change means 1121 transmits a Packet-In message according to the OFP to the OFC 212 to query about a packet processing rule.

Next, an operation of registering a path control rule will be described. The OFC 212 generates a path control rule based on packet information included in the Packet-In message transmitted from the OFS 211.

The OFC 212 extracts packet information from the Packet-In message and causes the communication identification means 114 to identify the communication. The communication identification means 114 identifies the communication based on an arbitrary element(s) included in the matching rule section in Fig. 18 or a combination of the elements. The communication identification means 114 may refer to the context information in the MN 21 and perform an advanced communication identification operation. For example, the communication identification means 114 may identify a service type of the communication based on the destination information and source information. For example, the communication identification means 114 may identify an application performing the communication by using information representing a relationship between the source information and an application being used.

A result obtained by the communication identification means 114 is held as a session identifier. For example, this session identifier is configured by an arbitrary element included in the matching rule section illustrated in Fig. 18 or a combination of the elements. A session identifier may be configured by an identifier of an application performing the communication in addition to the above elements. A session identifier may be configured by an identifier of a service of the communication in addition to the above elements.

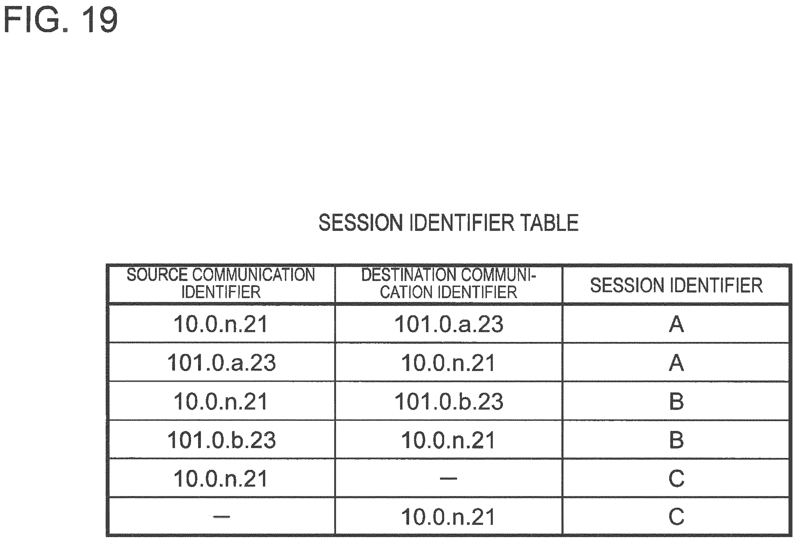

Fig. 19 is an exemplary session identifier table including exemplary information used by the communication identification means 114 to determine a session identifier. In Fig. 19, IP addresses are used as communication identifiers. The session identifier table is configured so that a unique session identifier is determined based on information about a source communication identifier and a destination communication identifier. Fig. 19 illustrates only exemplary information for determining a session identifier. The information is not limited to the table format illustrated in Fig. 19. In addition, while IP addresses are used as the communication identifiers in Fig. 19, other information may be used as the communication identifiers. For example, a combination of an IP address, a protocol number, and a port number may be used as a communication identifier. An arbitrary element included in the matching rule section illustrated in Fig. 18 or a combination of the elements may be used as a communication identifier.

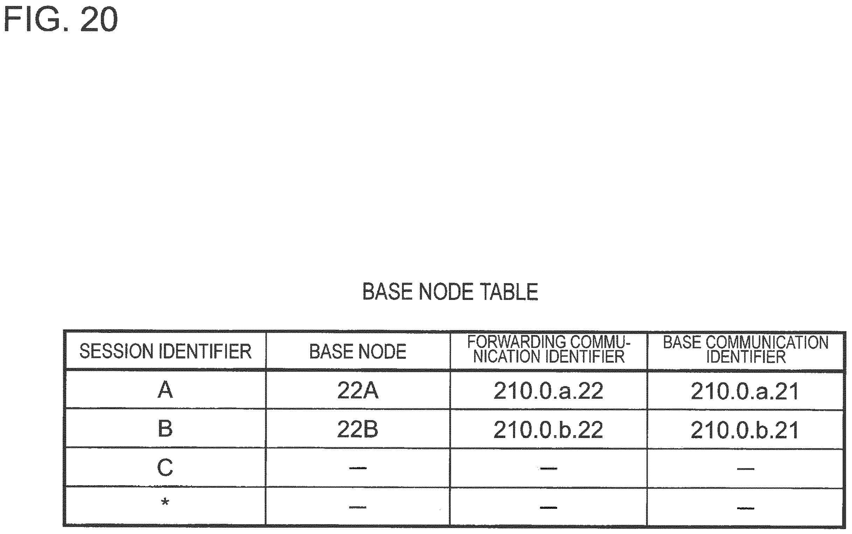

After the communication identification means 114 identifies the communication type, the selection means 115 determines a base node, a forwarding communication identifier relating to the apparatus, and a base communication identifier that correspond to the session identifier of the communication. Fig. 20 is an exemplary base node table including information for determining a base node. With the base node table in Fig. 20, a base node, a forwarding communication identifier, and a base communication identifier can be uniquely determined for a session identifier. In Fig. 20, there is a session identifier that is not associated with a base node. This entry indicates that no base node is used for the communication corresponding to the session identifier. Fig. 20 only illustrates exemplary information for determining a base node. The base node determination means used by the selection means 115 is not limited to such table. In addition, the table illustrated in Fig. 20 is only an example. The table may include elements other than those illustrated in Fig. 20.

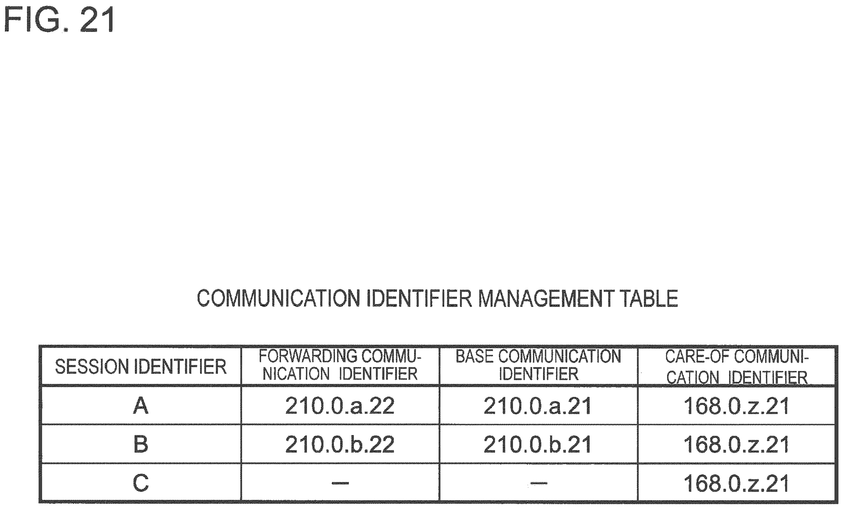

After the selection means 115 selects a base node, the obtained result is registered in the communication identifier management means 116. Fig. 21 is an exemplary communication identifier management table used by the communication identifier management means 116 to manage communication identifiers. In each entry in the communication identifier management table, a forwarding communication identifier, a base communication identifier, and a care-of communication identifier that correspond to a session identifier are managed. Fig. 21 illustrates only an example in which a table is used as a means for managing communication identifiers. Namely, the management means is not limited to use of such table. In addition, the information managed in associated with a session identifier is not limited to the communication identifiers. The information may be managed in association with other elements.

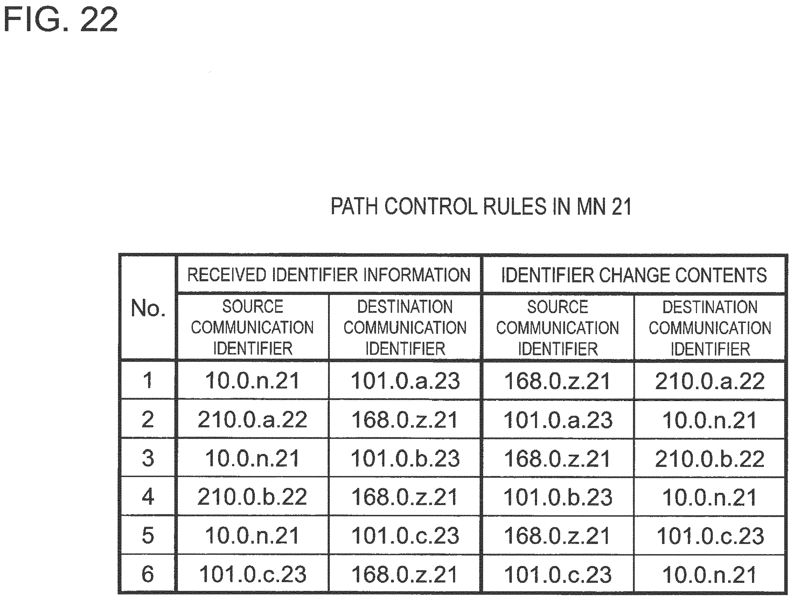

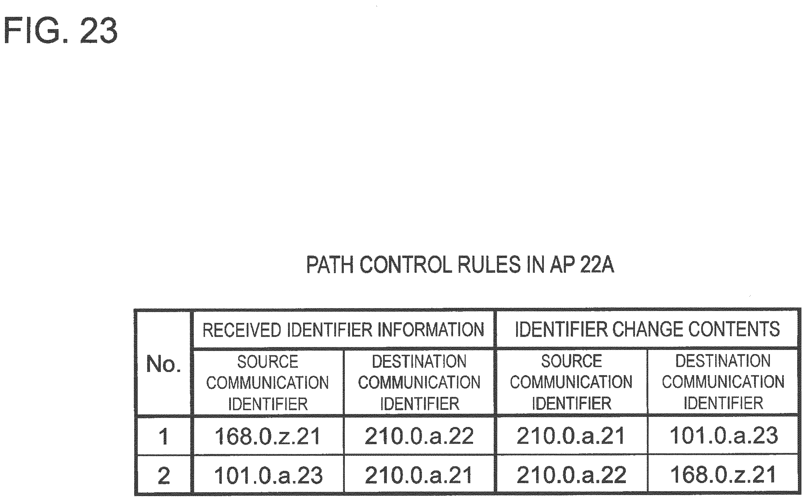

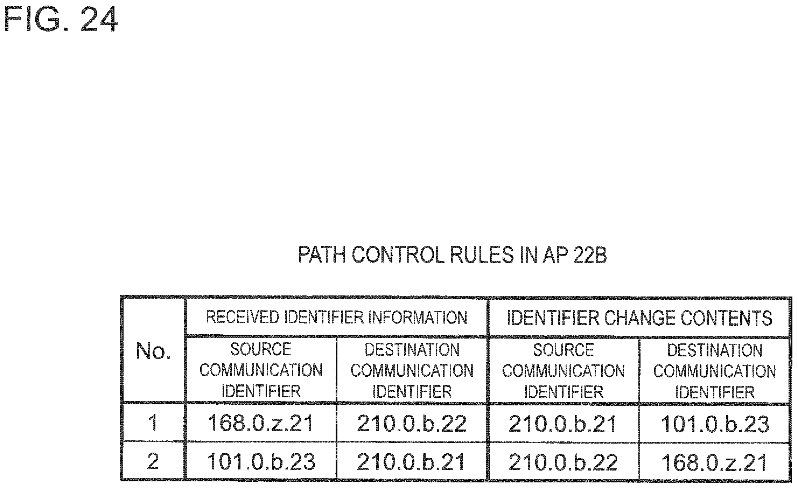

The OFC 212 refers to the information in the communication identifier management means 116, generates a packet processing rule(s), and registers the packet processing rule(s) in the OFS 211 by using a FlowMod message. Fig. 22 is a table illustrating exemplary path control rules registered in the OFS 211 in the MN 21. Fig. 23 is a table illustrating exemplary path control rules registered in the OFS 211 in the AP 22A. Fig. 24 is a table illustrating exemplary path control rules registered in the OFS 211 in the AP 22B.

Next, change of identifiers relating to communications between the MN 21 and the CNs 23A to 23C, respectively, will be described.

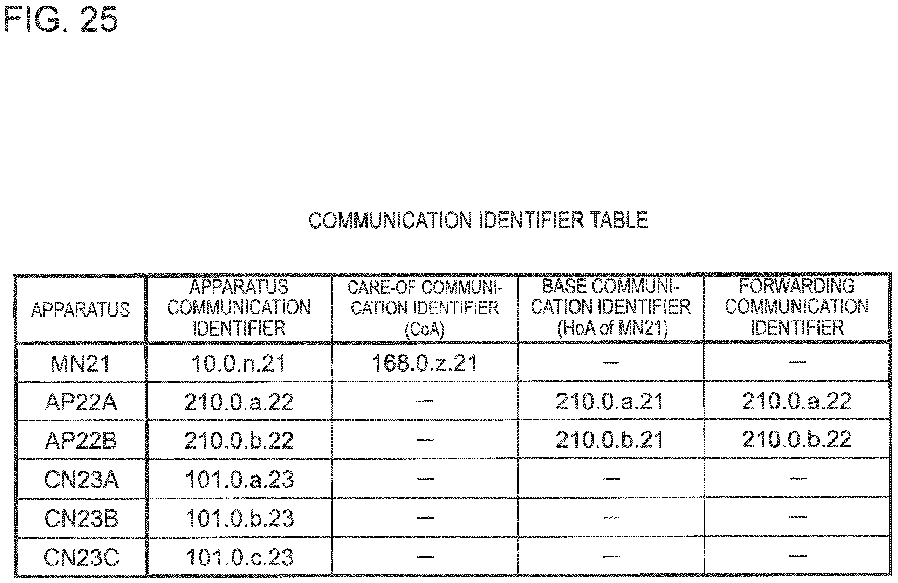

Fig. 25 is a table in which communication identifiers used in the present exemplary embodiment are organized.

A packet transmitted from the MN 21 to the CN 23A is provided with a source identifier "10.0.n.21" and a destination identifier "101.0.a.23." The MN 21 transmits the packet to the AP 22A by using a source identifier "168.0.z.21" and a destination identifier "210.0.a.22" in accordance with a rule No.1 in Fig. 22. When receiving the packet, the AP 22A transmits the packet to the CN 23A by using a source identifier "210.0.a.21" and the destination identifier "101.0.a.23" in accordance with a rule No.1 in Fig. 23.

A packet transmitted from the CN 23A to the MN 21 is provided with the source identifier "101.0.a.23" and the destination identifier "210.0.a.21." When receiving the packet from the CN 23A, the AP 22A transmits the packet to the MN 21 by using the source identifier "210.0.a.22" and the destination identifier "168.0.z.21" in accordance with a rule No.2 in Fig. 23. When receiving the packet, the MN 21 performs communication reception processing by using the source identifier "101.0.a.23" and the destination identifier "10.0.n.21" in accordance with a rule No.2 in Fig. 22.

Since a communication between the MN 21 and the CN 23B is similar to the communication between the MN 21 and the CN 23A, description of the communication will be omitted.

A packet transmitted from the MN 21 to the CN 23C is provided with the source identifier "10.0.n.21" and a destination identifier "101.0.c.23." The MN 21 transmits the packet to the CN 23C by using the source identifier "168.0.z.21" and the destination identifier "101.0.c.23" in accordance with a rule No.5 in Fig. 22.

A packet transmitted from the CN 23C to the MN 21 is provided with the source identifier "101.0.c.23" and the destination identifier "168.0.z.21." When receiving the packet from the CN 23C, the MN 21 performs communication reception processing by using the source identifier "101.0.c.23" and the destination identifier "10.0.n.21" in accordance with a rule No.6 in Fig. 22.

As described above, in the communication system 2 according to the present exemplary embodiment, the MN 21 can determine whether to use an AP and select an AP per communication in view of a service or an application. In this way, only the communications that need to be supported by a seamless communication function can use APs. As a result, the load on an individual AP can be reduced.

In addition, a plurality of APs 22A and AP 22B can simultaneously be used. Thus, even if a communication via any one of the APs is disconnected, the communications of the MN 21 are affected partially. As a result, the communication fault tolerance can be improved, which is counted as an advantageous effect.

In addition, since an OFC is included in an individual MN, an individual OFC does not need to manage an enormous number of OFSs. Since the number of OFCs is increased in proportion to the increase of the number of MNs, the scalability of the communication system is improved, which is counted as an advantageous effect.

In addition, unlike tunnel forwarding used in MIPv6 or the like, forwarding involving conversion of communication identifiers based on OpenFlow can be realized by directly rewriting a communication identifier(s) added to a packet. Thus, overhead is not caused; for example, the number of communication identifiers is not increased by encapsulation. Namely, the use efficiency of the communication paths is increased, which is counted as an advantageous effect.

### <Third Exemplary Embodiment>

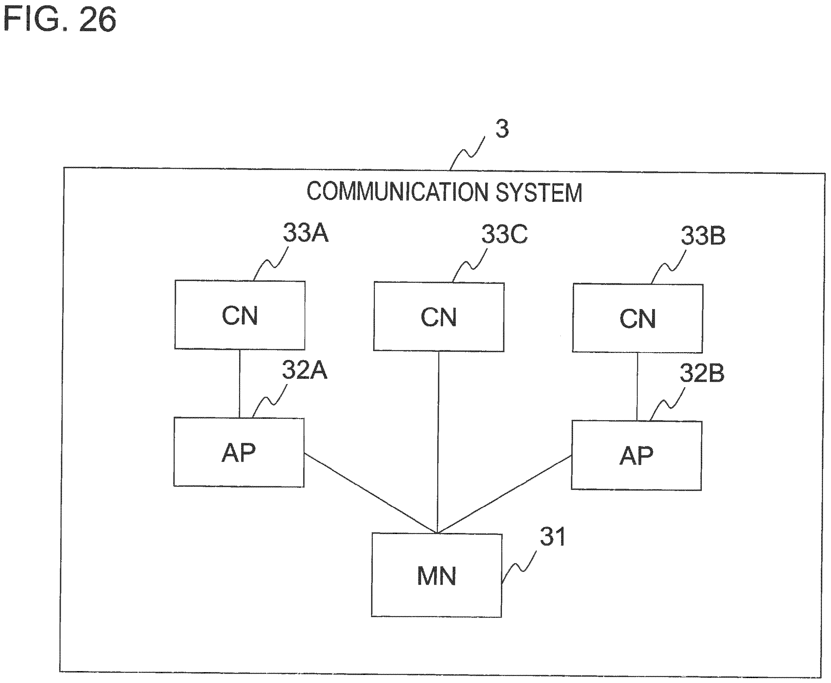

Next, a communication system according to a third exemplary embodiment will be described with reference to the drawings. The communication system according to the present exemplary embodiment is a communication system in which OpenFlow and tunnel forwarding are applied to the communication system according to the first exemplary embodiment. Fig. 26 illustrates an exemplary configuration of a communication system 3 according to the present exemplary embodiment. As illustrated in Fig. 26, the communication system 3 includes a mobile node (MN) 31, anchor points (APs) 32A and 32B, and correspondent nodes (CNs) 33A to 33C.

The MN 31 includes functions of an OpenFlow controller (OFC) and an OpenFlow switch (OFS) used in an OpenFlow technique and controls packet processing rules in an OFS and performs tunnel communication based on the OpenFlow protocol (OFP). The MN 31 corresponds to the mobile node 11 in the communication system 1A (Fig. 6) according to the first exemplary embodiment.

The AP 32A has a means for performing tunnel communication, namely, forwards communications from tunnels and forwards packets having certain communication identifiers through tunnels. The AP 32A corresponds to the base node 12A in the communication system (Fig. 6) according to the first exemplary embodiment. Since the functions of the AP 32B are the same as those of the AP 32A, description of the AP 32B will be omitted.

The CN 33A is a general-purpose communication apparatus. For example, the CN 33A can communicate with other apparatuses by using the IP protocol. The CN 33A corresponds to the correspondent node 13A in the communication system (Fig. 6) according to the first exemplary embodiment. Since the functions of the CNs 33B and 33C are the same as those of the CN 33A, description of the CNs 33B and 33C will be omitted.

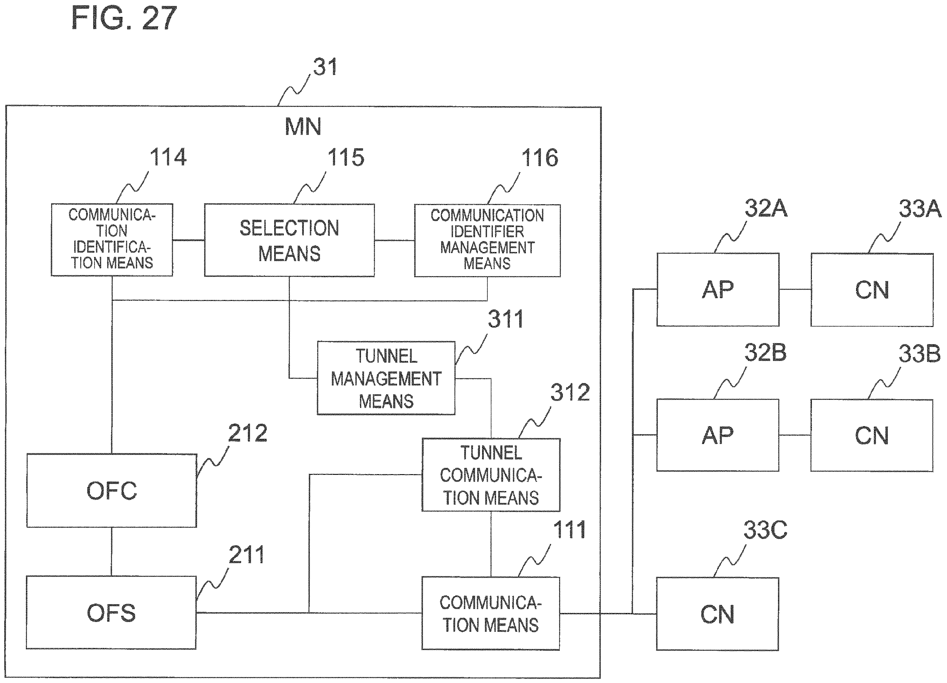

Fig. 27 is a block diagram illustrating an exemplary configuration of the MN 31. As illustrated in Fig. 27, the MN 31 includes at least one communication means 111, an OFS 211, an OFC 212, a communication identification means 114, a selection means 115, a communication identifier management means 116, a tunnel management means 311, and a tunnel communication means 312.

The tunnel management means 311 performs control and management operations such as for establishing and disconnecting tunnels with the AP 32A or 32B serving as a base node. The tunnel management means 311 manages a pair(s) of communication identifiers given to tunnel endpoints and manages a tunnel identifier(s) of the pair(s).

Based on information in the tunnel management means 311, the tunnel communication means 312 encapsulates packets and adds tunnel identifiers and removes tunnel identifiers from encapsulated packets.

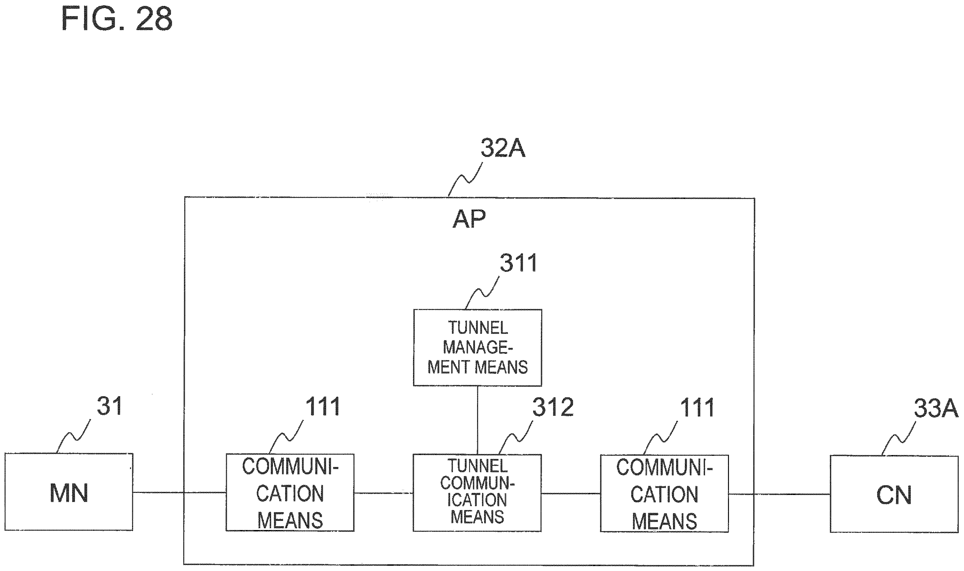

Fig. 28 is a block diagram illustrating an exemplary configuration of the AP 32A. As illustrated in Fig. 28, the AP 32A includes at least one communication means 111, a tunnel management means 311, and a tunnel communication means 312.

Next, an operation of the communication system 3 (Fig. 26) according to the present exemplary embodiment will be described. The following description will be made with a focus on the difference between the present exemplary embodiment and the first exemplary embodiment. In addition, since the functions of the APs 32A and 32B are the same, the AP 32A will be described, unless the APs 32A and 32B need to be distinguished from each other.

The tunnel management means 311 performs tunnel establishment control with the AP 32A serving as a tunnel endpoint and establishes a tunnel between the MN 31 and the AP 32A. The tunnel management means 311 may perform the tunnel establishment control independently of start of a communication from the MN 31 to the CN 33A. For example, the tunnel management means 311 may establish a tunnel before a communication. When a communication is started, if there is no tunnel that corresponds to the communication, the tunnel management means 311 may start to perform the tunnel establishment control.

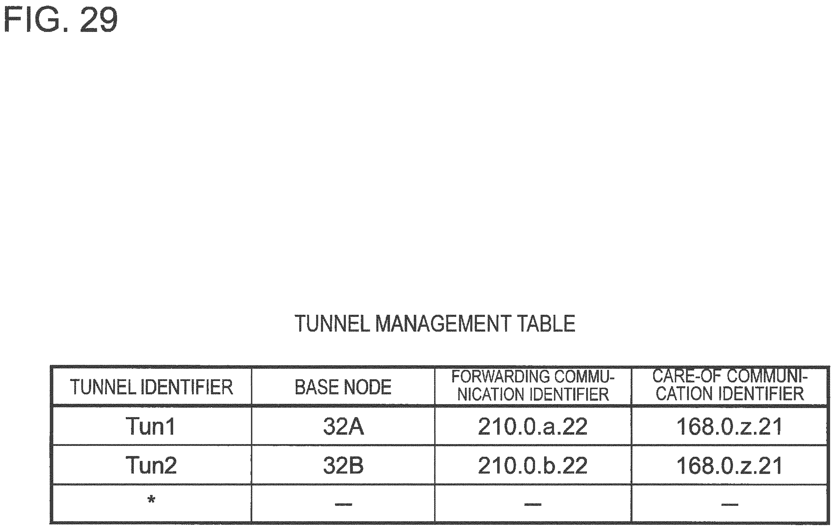

The tunnel management means 311 manages communication identifiers of a pair(s) serving as tunnel endpoints. Fig. 29 is an exemplary tunnel management table managed by the tunnel management means 311. As illustrated in Fig. 29, the tunnel management means 311 uses the tunnel management table to manage a care-of communication identifier of the MN 31 and a forwarding communication identifier of the AP 32A as a pair in an entry. The pair is provided with a tunnel identifier.

The tunnel communication means 312 refers to the tunnel management table in the tunnel management means 311 and performs processing depending on the received packet. For example, if the source identifier and the destination identifier of a received packet are a forwarding communication identifier and a care-of communication identifier, respectively, the tunnel communication means 312 recognizes that the packet is from the AP 32A, removes a header added to the packet, and forwards the payload portion to the OFS 211. In addition, if a tunnel identifier has been added to the received packet, the tunnel communication means 312 recognizes that the packet is to be transmitted from the MN 31, uses the received packet as the payload, associates the destination communication identifier and the source communication identifier with a forwarding communication identifier and a care-of communication identifier, respectively, and transmits the packet to the AP 32A via the communication means 111.

The tunnel communication means 312 in the AP 32A performs an operation in the opposite manner to the above operation of the tunnel communication means 312 in the MN 31. Namely, for example, if a source communication identifier and a destination communication identifier are a care-of communication identifier and a forwarding communication identifier of a received packet, respectively, the tunnel communication means 312 in the AP 32A recognizes that the packet has been encapsulated, decapsulates the packet, and forwards the payload packet. In addition, if a destination communication identifier of a received packet is a base communication identifier, the tunnel communication means 312 in the AP 32A uses the received packet as the payload, uses a destination communication identifier and a source communication identifier as a care-of communication identifier and a forwarding communication identifier, respectively, and forwards the packet.

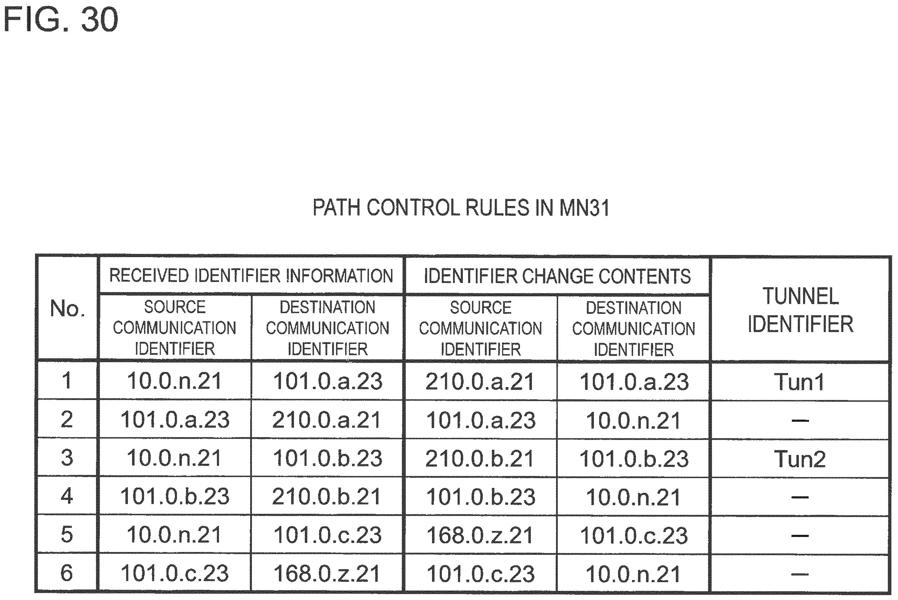

Fig. 30 is a table illustrating exemplary path control rules in the OFS 211 that are generated by the OFC 212.

A packet transmitted from the MN 31 to the CN 33A is provided with a source identifier "10.0.n.21" and a destination identifier "101.0.a.23." In accordance with a rule No.1 in Fig. 30, the OFS 211 in the MN 31 performs conversion into a source identifier "210.0.a.21" and a destination identifier "101.0.a.23," adds a tunnel identifier "Tunl," and forwards the packet to the tunnel communication means 312. In accordance with the tunnel identifier, the tunnel communication means 312 encapsulates and transmits the received packet to the AP 32A by using a source identifier "168.0.z.21" and a destination identifier "210.0.a.22." The AP 32A decapsulates the received packet and forwards the payload packet. The packet forwarded by the AP 32A reaches the CN 33A in accordance with normal IP routing.

A packet transmitted from the CN 33A to the MN 31 is provided with the source identifier "101.0.a.23" and the destination identifier "210.0.a.21." When receiving the packet, the AP 32A forwards the packet having the destination identifier "210.0.a.21" to the tunnel communication means 312 as a packet addressed to the tunnel identifier "Tun1." The tunnel communication means 312 performs encapsulation by using the headers of the source identifier "210.0.a.22" and the destination identifier "168.0.z.21" and forwards the packet to the MN 31. The tunnel communication means 312 in the MN 31 decapsulates the packet and forwards the payload portion to the OFS 211. The OFS 211 receives the packet having the source identifier "101.0.a.23" and the destination identifier "210.0.a.21" and performs reception processing on the packet by using the source identifier "101.0.a.23" and the destination identifier "10.0.n.21" in accordance with a rule No.2 in Fig. 30.

Since a communication between the MN 31 and the CN 33B is similar to the communication between the MN 31 and the CN 33A, description of the communication will be omitted.

In addition, a communication between the MN 31 and the CN 33C is the same as the communication between the MN 21 and the CN 23C according to the second exemplary embodiment, description of the communication will be omitted.

Hereinafter, advantageous effects provided by the communication system 3 according to the present exemplary embodiment will be described.

When communications are performed by using a plurality of tunnels, how the communications are allocated to the tunnels is a problem. In many cases, the communications are allocated based on information about addresses of the packets to be encapsulated. In the present exemplary embodiment, a function of identifying an individual communication is added. For example, the communication system 3 can allocate the communications to the tunnels by distinguishing the communications from each other based on their service or application types. Thus, load balancing during use of a plurality of tunnels can be achieved effectively.

According to the present invention, the following modes are possible.
(Mode 1)
   A mobile node may be the mobile node according to the first aspect.
(Mode 2)
   The mobile node according to mode 1, further comprising:
   first path control means that holds a first rule(s) for controlling a communication path(s) of a packet(s) and that controls a communication path(s) of a packet(s) relating to the mobile node based on the first rule(s), wherein
   the base node(s) comprises second path control means that holds a second rule(s) for controlling a communication path(s) of a packet(s) and that controls a communication path(s) of a packet(s) relating to the base node(s) based on the second rule(s), and
   the rule change means adds a control rule(s) for forwarding the packet(s) between the mobile node and the correspondent node via the selected base node to the first rule(s) and the second rule(s) held in the selected base node.
(Mode 3)
   The mobile node according to mode 2, wherein
   if identifiers for identifying a care-of address of the mobile node, the selected base node, the correspondent node, and the mobile node are used as first to fourth identifiers, respectively, the rule change means adds to the first rule(s) a rule for changing source and destination identifiers of a packet that represent the fourth and third identifiers, respectively, to the first and second identifiers, respectively.
(Mode 4)
   The mobile node according to mode 3, wherein
   if an identifier for identifying a home address of the mobile node is used as a fifth identifier, the rule change means adds to the second rule(s) held in the selected base node a rule for changing source and destination identifiers of a packet that represent the first and second identifiers, respectively, to the fifth and third identifiers, respectively.
(Mode 5)
   The mobile node according to any one of modes 2 to 4, wherein
   if identifiers for identifying a care-of address of the mobile node, the selected base node, the correspondent node, and the mobile node are used as first to fourth identifiers, respectively, the rule change means adds to the first rule(s) a rule for changing source and destination identifiers of a packet that represent the second and first identifiers, respectively, to the third and fourth identifiers, respectively.
(Mode 6)
   The mobile node according to mode 5, wherein
   if an identifier for identifying a home address of the mobile node is used as a fifth identifier, the rule change means adds to the second rule(s) held in the selected base node a rule for changing source and destination identifiers of a packet that represent the third and fifth identifiers, respectively, to the second and first identifiers, respectively.
(Mode 7)
   The mobile node according to any one of modes 1 to 6, comprising:
   first tunnel management means that stores a first identifier for identifying a care-of address of the mobile node, a second identifier for identifying the selected base node, and a tunnel identifier for identifying a tunnel communication between the mobile node and the selected base node in association with each other; and
   first tunnel communication means that extracts, when receiving a packet whose source and destination identifiers represent, respectively, the second and first identifiers associated with the tunnel identifier, a payload of the received packet and forwards the extracted payload as a packet.
(Mode 8)
   The mobile node according to mode 7, wherein
   when receiving a packet including the tunnel identifier, the first tunnel communication means uses the first and second identifiers associated with the tunnel identifier, respectively, as source and destination identifiers of the received packet, generates a packet including the received packet as a payload, and transmits the generated packet to the selected base node.
(Mode 9)
   A communication system may be the communication system according to the second aspect.
(Mode 10)
   The communication system according to mode 9, wherein
   the mobile node comprises first path control means that holds a first rule(s) for controlling a communication path(s) of a packet(s) and that controls a communication path(s) of a packet(s) relating to the mobile node based on the first rule(s),
   the base node(s) comprises second path control means that holds a second rule(s) for controlling a communication path(s) of a packet(s) and that controls a communication path(s) of a packet(s) relating to the base node(s) based on the second rule(s), and
   the rule change means adds a control rule(s) for forwarding the packet(s) between the mobile node and the correspondent node via the selected base node to the first rule(s) and the second rule(s) held in the selected base node.
(Mode 11)
   The communication system according to mode 10, wherein
   if identifiers for identifying a care-of address of the mobile node, the selected base node, the correspondent node, and the mobile node are used as first to fourth identifiers, respectively, the rule change means adds to the first rule(s) a rule for changing source and destination identifiers of a packet that represent the fourth and third identifiers, respectively, to the first and second identifiers, respectively.
(Mode 12)
   The communication system according to mode 11, wherein
   if an identifier for identifying a home address of the mobile node is used as a fifth identifier, the rule change means adds to the second rule(s) held in the selected base node a rule for changing source and destination identifiers of a packet that represent the first and second identifiers, respectively, to the fifth and third identifiers, respectively.
(Mode 13)
   The communication system according to any one of modes 10 to 12, wherein
   if identifiers for identifying a care-of address of the mobile node, the selected base node, the correspondent node, and the mobile node are used as first to fourth identifiers, respectively, the rule change means adds to the first rule(s) a rule for changing source and destination identifiers of a packet that represent the second and first identifiers, respectively, to the third and fourth identifiers, respectively.
(Mode 14)
   The communication system according to mode 13, wherein
   if an identifier for identifying a home address of the mobile node is used as a fifth identifier, the rule change means adds to the second rule(s) held in the selected base node a rule for changing source and destination identifiers of a packet that represent the third and fifth identifiers, respectively, to the second and first identifiers, respectively.
(Mode 15)
   The communication system according to any one of modes 9 to 14, wherein
   the mobile node comprises:
   first tunnel management means that stores a first identifier for identifying a care-of address of the mobile node, a second identifier for identifying the selected base node, and a tunnel identifier for identifying a tunnel communication between the mobile node and the selected base node in association with each other; and
   first tunnel communication means that extracts, when receiving a packet whose source and destination identifiers represent, respectively, the second and first identifiers associated with the tunnel identifier, a payload of the received packet and forwards the extracted payload as a packet.
(Mode 16)
   The communication system according to mode 15, wherein
   when receiving a packet including the tunnel identifier, the first tunnel communication means uses the first and second identifiers associated with the tunnel identifier, respectively, as source and destination identifiers of the received packet, generates a packet including the received packet as a payload, and transmits the generated packet to the selected base node.
(Mode 17)
   The communication system according to any one of mode 15 or 16, wherein
   an individual base node comprises:
   second tunnel management means that stores a first identifier for identifying a care-of address of the mobile node, a second identifier for identifying the selected base node, and a tunnel identifier for identifying a tunnel communication between the mobile node and the selected base node in association with each other; and
   second tunnel communication means that extracts, when receiving a packet whose source and destination identifiers represent, respectively, the first and second identifiers associated with the tunnel identifier, a payload of the received packet and forwards the extracted payload as a packet.
(Mode 18)
   A mobile communication method may be the mobile communication method according to the third aspect.
(Mode 19)
   The mobile communication method according to mode 18, comprising:
   if identifiers for identifying a care-of address of the mobile node, the selected base node, the correspondent node, and the mobile node are used as first to fourth identifiers, respectively, setting in the mobile node a rule for changing source and destination identifiers of a packet that represent the fourth and third identifiers, respectively, to the first and second identifiers, respectively.
(Mode 20)
   The mobile communication method according to mode 19, comprising:
   if an identifier for identifying a home address of the mobile node is used as a fifth identifier, setting in the selected base node a rule for changing source and destination identifiers of a packet that represent the first and second identifiers, respectively, to the fifth and third identifiers, respectively.
(Mode 21)
   The mobile communication method according to any one of modes 18 to 20, comprising:
   if identifiers for identifying a care-of address of the mobile node, a selected base node, the correspondent node, and the mobile node are used as first to fourth identifiers, respectively, setting in the mobile node a rule for changing source and destination identifiers of a packet that represent the second and first identifiers, respectively, to the third and fourth identifiers, respectively.
(Mode 22)
   The mobile communication method according to mode 21, comprising:
   if an identifier for identifying a home address of the mobile node is used as a fifth identifier, setting in the selected base node a rule for changing source and destination identifiers of a packet that represent the third and fifth identifiers, respectively, to the second and first identifiers, respectively.
(Mode 23)
   The mobile communication method according to any one of modes 18 to 22, comprising:
   by the mobile node, storing a first identifier for identifying a care-of address of the mobile node, a second identifier for identifying the selected base node, and a tunnel identifier for identifying a tunnel communication between the mobile node and the selected base node in association with each other; and
   extracting, when receiving a packet whose source and destination identifiers represent, respectively, the second and first identifiers associated with the tunnel identifier, a payload of the received packet and forward the extracted payload as a packet.
(Mode 24)
   The mobile communication method according to mode 23, comprising:
   by the mobile node, when receiving a packet including the tunnel identifier, using the first and second identifiers associated with the tunnel identifier, respectively, as source and destination identifiers of the received packet, generate a packet including the received packet as a payload, and transmitting the generated packet to the selected base node.
(Mode 25)
   A program may be the program according to the fourth aspect.

Modifications and adjustments of the exemplary embodiments are possible within the scope of the overall disclosure (including the claims) of the present invention and based on the basic technical concept of the present invention. In addition, various combinations and selections of various disclosed elements (including the elements in each of the claims, exemplary embodiments, drawings, etc.) are possible within the scope of the entire disclosure of the present invention. Namely, the present invention of course includes various variations and modifications that could be made by those skilled in the art according to the entire disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

1, 1A, 2, 3 communication system
11, 21, 31 mobile node (MN)
12, 12A and 12B base node
13, 13A-13C, 23A-23C, 33A-33C correspondent node (CN)
22A, 22B, 32A, 32B anchor point (AP)
111 communication means
112 path control means
113 rule change means
114 communication identification means
115 selection means
116 communication identifier management means
211 OpenFlow switch (OFS)
212 OpenFlow controller (OFC)
311 tunnel management means
312 tunnel communication means
1121 path change means
1122 path control rules

## Claims

1. A mobile node (11; 21; 31), comprising:
selection means (115) for selecting, from base nodes, a base node (12; 22; 32) for relaying a packet(s) between the mobile node (11; 21; 31) itself and a correspondent node (13; 23; 33); and
rule change means (113) for generating a path control rule(s) for forwarding the packet(s) between the mobile node itself and the correspondent node via the selected base node,
wherein the rule change means (113) is adapted to set the path control rule(s) in the mobile node itself and the selected base node.

2. The mobile node according to claim 1, further comprising:
first path control means (112) for holding a first rule(s) for controlling a communication path(s) of a packet(s) and controlling a communication path(s) of a packet(s) relating to the mobile node based on the first rule(s), wherein
the base nodes each comprise second path control means (112) for holding a second rule(s) for controlling a communication path(s) of a packet(s) and controlling a communication path(s) of a packet(s) relating to the base node based on the second rule(s), and
the rule change means (113) is adapted to add a path control rule(s) for forwarding the packet(s) between the mobile node and the correspondent node via the selected base node to the first rule(s) and the second rule(s) held in the selected base node.

3. The mobile node according to claim 2, wherein
if identifiers for identifying a care-of address of the mobile node, the selected base node, the correspondent node, and the mobile node are used as first to fourth identifiers, respectively, the rule change means (113) is adapted to add to the first rule(s) a rule for changing source and destination identifiers of a packet that represent the fourth and third identifiers, respectively, to the first and second identifiers, respectively.

4. The mobile node according to claim 3, wherein
if an identifier for identifying a home address of the mobile node is used as a fifth identifier, the rule change means (113) is adapted to add to the second rule(s) held in the selected base node a rule for changing source and destination identifiers of a packet that represent the first and second identifiers, respectively, to the fifth and third identifiers, respectively.

5. The mobile node according to any one of claims 2 to 4, wherein
if identifiers for identifying a care-of address of the mobile node, the selected base node, the correspondent node, and the mobile node are used as first to fourth identifiers, respectively, the rule change means (113) is adapted to add to the first rule(s) a rule for changing source and destination identifiers of a packet that represent the second and first identifiers, respectively, to the third and fourth identifiers, respectively.

6. The mobile node according to claim 5, wherein
if an identifier for identifying a home address of the mobile node is used as a fifth identifier, the rule change means (113) is adapted to add to the second rule(s) held in the selected base node a rule for changing source and destination identifiers of a packet that represent the third and fifth identifiers, respectively, to the second and first identifiers, respectively.

7. The mobile node according to any one of claims 1 to 6, comprising:
first tunnel management means (311) for storing a first identifier for identifying a care-of address of the mobile node (31), a second identifier for identifying the selected base node (32), and a tunnel identifier for identifying a tunnel communication between the mobile node (31) and the selected base node (32) in association with each other; and
first tunnel communication means (312) for extracting, when receiving a packet whose source and destination identifiers represent, respectively, the second and first identifiers associated with the tunnel identifier, a payload of the received packet and forwards the extracted payload as a packet.

8. The mobile node according to claim 7, wherein
when receiving a packet including the tunnel identifier, the first tunnel communication means (311) is adapted to use the first and second identifiers associated with the tunnel identifier, respectively, as source and destination identifiers of the received packet, generate a packet including the received packet as a payload, and transmit the generated packet to the selected base node (32).

9. A communication system, comprising:
a mobile node (11; 21; 31) according to any one of claims 1 to 8; and
base nodes (12; 22; 32).

10. The communication system according to claim 9, wherein
each of the base nodes comprises:
second tunnel management means (311) for storing a first identifier for identifying a care-of address of the mobile node (31), a second identifier for identifying the selected base node (32), and a tunnel identifier for identifying a tunnel communication between the mobile node (31) and the selected base node (32) in association with each other; and
second tunnel communication means (312) for extracting, when receiving a packet whose source and destination identifiers represent, respectively, the first and second identifiers associated with the tunnel identifier, a payload of the received packet and forwards the extracted payload as a packet.

11. A mobile communication method by a mobile node (11; 21; 31), comprising:
selecting, from base nodes, a base node (12; 22; 32) that relays a packet(s) between the mobile node itself and a correspondent node (13, 23; 33);
generating a path control rule(s) for forwarding the packet(s) between the mobile node itself and the correspondent node via the selected base node; and
setting the path control rule(s) in the mobile node itself and the selected base node.

12. The mobile communication method according to claim 11, further comprising the features as additionally defined in one of claims 3, 4, 5, 6. 7 or 8.

13. A program, causing a computer provided in a mobile node (11; 21; 31) to execute:
selecting, from base nodes, a base node (12; 22; 32) that relays a packet(s) between the mobile node itself and a correspondent node (13; 23; 33);
generating a path control rule(s) for forwarding the packet(s) between the mobile node itself and the correspondent node via the selected base node; and
setting the path control rule(s) in the mobile node itself and the selected base node.

## Patentansprüche

1. Mobiler Knoten (11; 21; 31), umfassend:
Auswahlmittel (115) zum Auswählen eines Basisknotens (12; 22; 32) aus Basisknoten zum Weiterleiten eines oder mehrerer Pakete zwischen dem mobilen Knoten (11; 21; 31) selbst und einem korrespondierenden Knoten (13; 23; 33); und
Regeländerungsmittel (113) zum Erzeugen einer Pfadsteuerungsregel(n) zum Weiterleiten der Pakete zwischen dem mobilen Knoten selbst und dem korrespondierenden Knoten über den ausgewählten Basisknoten,
wobei die Regeländerungseinrichtung (113) angepasst ist, um die Pfadsteuerungsregel(n) in dem mobilen Knoten selbst und dem ausgewählten Basisknoten zu setzen.

2. Der mobile Knoten nach Anspruch 1, weiterhin umfassend:
erste Wegesteuerungseinrichtung (112) zum Halten einer ersten Regel(n) zum Steuern eines oder mehrerer Kommunikationswege eines oder mehrerer Pakete und zum Steuern eines oder mehrerer Kommunikationswege eines oder mehrerer Pakete, die sich auf den mobilen Knoten beziehen, basierend auf der ersten Regel(n), wobei
die Basisknoten jeweils eine zweite Pfadsteuereinrichtung (112) zum Halten einer zweiten Regel(n) zum Steuern eines oder mehrerer Kommunikationswege eines oder mehrerer Pakete und zum Steuern eines oder mehrerer Kommunikationswege eines oder mehrerer Pakete, die sich auf den Basisknoten beziehen, auf der Grundlage der zweiten Regel(n) umfassen, und
die Regeländerungseinrichtung (113) angepasst ist, um eine Pfadsteuerungsregel(n) zum Weiterleiten der Pakete zwischen dem mobilen Knoten und dem entsprechenden Knoten über den ausgewählten Basisknoten den erste(n) Regel(n) und den zweite(n) Regel(n), die in dem ausgewählten Basisknoten gehalten werden, hinzuzufügen.

3. Der mobile Knoten nach Anspruch 2, wobei
wenn Identifikatoren zum Identifizieren einer Care-of-Adresse des mobilen Knotens, des ausgewählten Basisknotens, des korrespondierenden Knotens und des mobilen Knotens jeweils als erste bis vierte Identifikatoren verwendet werden, die Regeländerungseinrichtung (113) angepasst ist, um zu der ersten Regel(n) eine Regel zum Ändern von Quell- und Zielidentifikatoren eines Pakets, die jeweils die vierten bzw. dritten Identifikatoren darstellen, in erste bzw. zweite Identifikatoren, hinzuzufügen.

4. Der mobile Knoten nach Anspruch 3, wobei
wenn ein Identifikator zum Identifizieren einer Heimatadresse des mobilen Knotens als fünfter Identifikator verwendet wird, das Regeländerungsmittel (113) angepasst ist, um der zweiten Regel(n), die in dem ausgewählten Basisknoten gehalten wird(n), eine Regel zum Ändern der Quell- und Zielidentifikatoren eines Pakets, die den ersten bzw. zweiten Identifikator repräsentieren, in den fünften bzw. dritten Identifikator, hinzuzufügen.

5. Der mobile Knoten nach einem der Ansprüche 2 bis 4, wobei
wenn Identifikatoren zum Identifizieren einer Care-of-Adresse des mobilen Knotens, des ausgewählten Basisknotens, des korrespondierenden Knotens und des mobilen Knotens jeweils als erste bis vierte Identifikatoren verwendet werden, das Regeländerungsmittel (113) angepasst ist, um der ersten Regel(n) eine Regel zum Ändern von Quell- und Zielidentifikatoren eines Pakets, die jeweils den zweiten bzw. ersten Identifikator repräsentieren, in den dritten bzw. vierten Identifikator, hinzuzufügen.

6. Der mobile Knoten nach Anspruch 5, wobei
wenn ein Identifikator zum Identifizieren einer Heimatadresse des mobilen Knotens als fünfter Identifikator verwendet wird, das Regeländerungsmittel (113) angepasst ist, um der zweiten Regel(n), die in dem ausgewählten Basisknoten gehalten wird, eine Regel zum Ändern der Quell- und Zielidentifikatoren eines Pakets, die jeweils den dritten bzw. fünften Identifikator repräsentieren, in den zweiten bzw. ersten Identifikator, hinzuzufügen.

7. Der mobile Knoten nach einem der Ansprüche 1 bis 6, aufweisend:
eine erste Tunnelverwaltungseinrichtung (311) zum Speichern eines ersten Identifikators zum Identifizieren einer Care-of-Adresse des mobilen Knotens (31), eines zweiten Identifikators zum Identifizieren des ausgewählten Basisknotens (32) und eines Tunnelidentifikators zum Identifizieren einer Tunnelkommunikation zwischen dem mobilen Knoten (31) und dem ausgewählten Basisknoten (32) in Verbindung miteinander; und
eine erste Tunnelkommunikationseinrichtung (312) zum Extrahieren einer Nutzlast des empfangenen Pakets beim Empfang eines Pakets, dessen Quell- und Zielkennzeichen jeweils die zweite und erste mit der Tunnelkennung verknüpfte Kennung darstellen, und zum Weiterleiten der extrahierten Nutzlast als Paket.

8. Der mobile Knoten nach Anspruch 7, wobei
wenn ein Paket empfangen wird, das den Tunnelidentifikator enthält, das erste Tunnelkommunikationsmittel (311) angepasst ist, um die ersten und zweiten Identifikatoren, die dem Tunnelidentifikator zugeordnet sind, als Quell- und Zielidentifikatoren des empfangenen Pakets zu verwenden, ein Paket zu erzeugen, das das empfangene Paket als Nutzlast enthält, und das erzeugte Paket an den ausgewählten Basisknoten (32) zu übertragen.

9. Kommunikationssystem, umfassend:
einen mobilen Knoten (11; 21; 31) gemäß einem der Ansprüche 1 bis 8; und
Basisknoten (12; 22; 22; 32).

10. Das Kommunikationssystem nach Anspruch 9, wobei jeder der Basisknoten umfasst:
eine zweite Tunnelverwaltungseinrichtung (311) zum Speichern eines ersten Identifizierers zum Identifizieren einer Care-of-Adresse des mobilen Knotens (31), eines zweiten Identifizierers zum Identifizieren des ausgewählten Basisknotens (32) und eines Tunnelidentifizierers zum Identifizieren einer Tunnelkommunikation zwischen dem mobilen Knoten (31) und dem ausgewählten Basisknoten (32) in Verbindung miteinander; und
zweite Tunnelkommunikationseinrichtung (312) zum Extrahieren einer Nutzlast des empfangenen Pakets beim Empfang eines Pakets, dessen Quell- und Zielkennzeichen jeweils die ersten und zweiten Identifikatoren darstellen, die dem Tunnelidentifikator zugeordnet sind, und zum Weiterleiten der extrahierten Nutzlast als Paket.

11. Mobilkommunikationsverfahren durch einen mobilen Knoten (11; 21; 31), umfassend:
Auswählen eines Basisknotens (12; 22; 32) aus Basisknoten, der ein Paket (Pakete) zwischen dem mobilen Knoten selbst und einem entsprechenden Knoten (13, 23; 33) weiterleitet;
Erzeugen einer Pfadsteuerungsregel(n) zur Weiterleitung der Pakete zwischen dem mobilen Knoten selbst und dem korrespondierenden Knoten über den ausgewählten Basisknoten; und Setzen der Pfadsteuerungsregel(n) im mobilen Knoten selbst und dem ausgewählten Basisknoten.

12. Mobilkommunikationsverfahren nach Anspruch 11, das ferner die Merkmale umfasst, die zusätzlich in einem der Ansprüche 3, 4, 5, 6, 7 oder 8 definiert sind.

13. Ein Programm, das bewirkt, dass ein in einem mobilen Knoten (11; 21; 31) bereitgestellter Computer ausführt:
Auswählen eines Basisknotens (12; 22; 32) aus Basisknoten, der ein Paket oder mehrere Pakete zwischen dem mobilen Knoten selbst und einem entsprechenden Knoten (13; 23; 33) weiterleitet;
Erzeugen einer Pfadsteuerungsregel(n) zur Weiterleitung der Pakete zwischen dem mobilen Knoten selbst und dem korrespondierenden Knoten über den ausgewählten Basisknoten; und Setzen der Pfadsteuerungsregel(n) im mobilen Knoten selbst und dem ausgewählten Basisknoten.

## Revendications

1. Noeud mobile (11 ; 21 ; 31), comprenant :
des moyens de sélection (115) pour sélectionner, parmi des noeuds de base, un noeud de base (12 ; 22 ; 32) pour relayer un(des) paquet(s) entre le noeud mobile (11 ; 21 ; 31) même et un noeud correspondant (13 ; 23 ; 33) ; et
des moyens de changement de règle (113) pour générer une(des) règle(s) de contrôle de trajet pour transférer le (s) paquet (s) entre le noeud mobile même et le noeud correspondant via le noeud de base sélectionné,
dans lequel les moyens de changement de règle (113) sont adaptés pour établir la(les) règle(s) de contrôle de trajet dans le noeud mobile même et le noeud de base sélectionné.

2. Noeud mobile selon la revendication 1, comprenant en outre :
des premiers moyens de contrôle de trajet (112) pour contenir une(des) première(s) règle(s) pour contrôler un(des) trajet(s) de communication d'un(de) paquet(s) et contrôler un(des) trajet(s) de communication d'un(de) paquet(s) relatif(s) au noeud mobile sur la base de la(des) première(s) règle(s), où
les noeuds de base comprennent chacun des seconds moyens de contrôle de trajet (112) pour contenir une(des) seconde(s) règle(s) pour contrôler un(des) trajet(s) de communication d'un(de) paquet(s) et contrôler un(des) trajet(s) de communication d'un(de) paquet(s) relatif(s) au noeud de base sur la base de la (des) seconde(s) règle(s), et
les moyens de changement de règle (113) sont adaptés pour ajouter une(des) règle(s) contrôle de trajet pour transférer le(s) paquet(s) entre le noeud mobile et le noeud correspondant via le noeud de base sélectionné à la(aux) première(s) règle(s) et à la(aux) seconde(s) règle(s) contenues dans le noeud de base sélectionné.

3. Noeud mobile selon la revendication 2, dans lequel
si des identificateurs pour identifier une adresse temporaire du noeud mobile, le noeud de base sélectionné, le noeud correspondant, et le noeud mobile sont utilisés comme premier à quatrième identificateurs, respectivement, les moyens de changement de règle (113) sont adaptés pour ajouter à la(aux) première(s) règle(s) une règle pour changer des identificateurs de source et de destination d'un paquet qui représentent les quatrième et troisième identificateurs, respectivement, en les premier et deuxième identificateurs, respectivement.

4. Noeud mobile selon la revendication 3, dans lequel
si un identificateur pour identifier une adresse de rattachement du noeud mobile est utilisé comme un cinquième identificateur, les moyens de changement de règle (113) sont adaptés pour ajouter à la(aux) seconde (s) règle (s) contenue (s) dans le noeud de base sélectionné une règle pour changer des identificateurs de source et de destination d'un paquet qui représentent les premier et deuxième identificateurs, respectivement, en les cinquième et troisième identificateurs, respectivement.

5. Noeud mobile selon l'une quelconque des revendications 2 à 4, dans lequel
si des identificateurs pour identifier une adresse temporaire du noeud mobile, le noeud de base sélectionné, le noeud correspondant, et le noeud mobile sont utilisés comme premier à quatrième identificateurs, respectivement, les moyens de changement de règle (113) sont adaptés pour ajouter à la(aux) première(s) règle(s) une règle pour changer des identificateurs de source et de destination d'un paquet qui représentent les deuxième et premier identificateurs, respectivement, en les troisième et quatrième identificateurs, respectivement.

6. Noeud mobile selon la revendication 5, dans lequel
si un identificateur pour identifier une adresse de rattachement du noeud mobile est utilisé comme un cinquième identificateur, les moyens de changement de règle (113) sont adaptés pour ajouter à la(aux) seconde (s) règle (s) contenue (s) dans le noeud de base sélectionné une règle pour changer des identificateurs de source et de destination d'un paquet qui représentent les troisième et cinquième identificateurs, respectivement, en les deuxième et premier identificateurs, respectivement.

7. Noeud mobile selon l'une quelconque des revendications 1 à 6, comprenant :
des premiers moyens de gestion de tunnel (311) pour stocker un premier identificateur pour identifier une adresse temporaire du noeud mobile (31), un deuxième identificateur pour identifier le noeud de base sélectionné (32), et un identificateur de tunnel pour identifier une communication de tunnel entre le noeud mobile (31) et le noeud de base sélectionné (32) en association les uns avec les autres ; et
des premiers moyens de communication tunnel (312) pour extraire, lors de la réception d'un paquet dont les identificateurs de source et de destination représentent, respectivement, les deuxième et premier identificateurs associés à l'identificateur de tunnel, une charge utile du paquet reçu et transfèrent la charge utile extraite comme un paquet.

8. Noeud mobile selon la revendication 7, dans lequel
lors de la réception d'un paquet incluant l'identificateur de tunnel, les premiers moyens de communication de tunnel (311) sont adaptés pour utiliser les premier et deuxième identificateurs associés à l'identificateur de tunnel, respectivement, comme des identificateurs de source et de destination du paquet reçu, générer un paquet incluant le paquet reçu comme une charge utile, et transmettre le paquet généré au noeud de base sélectionné (32).

9. Système de communication, comprenant :
un noeud mobile (11 ; 21 ; 31) selon l'une quelconque des revendications 1 à 8 ; et
des noeuds de base (12 ; 22 ; 32).

10. Système de communication selon la revendication 9, dans lequel
chacun des noeuds de base comprend :
des seconds moyens de gestion de tunnel (311) pour stocker un premier identificateur pour identifier une adresse temporaire du noeud mobile (31), un deuxième identificateur pour identifier le noeud de base sélectionné (32), et un identificateur de tunnel pour identifier une communication de tunnel entre le noeud mobile (31) et le noeud de base sélectionné (32) en association les uns avec les autres ; et
des seconds moyens de communication tunnel (312) pour extraire, lors de la réception d'un paquet dont les identificateurs de source et de destination représentent, respectivement, les premier et deuxième identificateurs associés à l'identificateur de tunnel, une charge utile du paquet reçu et transfèrent la charge utile extraite comme un paquet.

11. Procédé de communication mobile par un noeud mobile (11 ; 21 ; 31), comprenant :
la sélection, parmi des noeuds de base, d'un noeud de base (12 ; 22 ; 32) qui relaie un(des) paquet (s) entre le noeud mobile même et un noeud correspondant (13 ; 23 ; 33) ;
la génération d'une(de) règle(s) de contrôle de trajet pour transférer le(s) paquet(s) entre le noeud mobile même et le noeud correspondant via le noeud de base sélectionné ; et
l'établissement de la(des) règle(s) de contrôle de trajet dans le noeud mobile même et le noeud de base sélectionné.

12. Procédé de communication mobile selon la revendication 11, comprenant en outre les caractéristiques telles que définies additionnellement dans l'une des revendications 3, 4, 5, 6, 7 ou 8.

13. Programme, amenant un ordinateur pourvu dans un noeud mobile (11 ; 21 ; 31) à exécuter :
la sélection, parmi des noeuds de base, d'un noeud de base (12 ; 22 ; 32) qui relaie un(des) paquet (s) entre le noeud mobile même et un noeud correspondant (13 ; 23 ; 33) ;
la génération d'une(de) règle(s) de contrôle de trajet pour transférer le(s) paquet(s) entre le noeud mobile même et le noeud correspondant via le noeud de base sélectionné ; et
l'établissement de la(des) règle(s) de contrôle de trajet dans le noeud mobile même et le noeud de base sélectionné.
